(19) Europäisches Patentamt
European Patent Office
Office européen des brevets

(11) EP 1 950 631 A1

(12) **EUROPEAN PATENT APPLICATION**
published in accordance with Art. 158(3) EPC

(43) Date of publication:
**30.07.2008 Bulletin 2008/31**

(21) Application number: **06822797.4**

(22) Date of filing: **01.11.2006**

(51) Int Cl.:
***G03H 1/02*** *(2006.01)* ***G11B 7/0065*** *(2006.01)*
***G11B 7/09*** *(2006.01)* ***G11B 7/244*** *(2006.01)*

(86) International application number:
**PCT/JP2006/321868**

(87) International publication number:
**WO 2007/052706 (10.05.2007 Gazette 2007/19)**

(84) Designated Contracting States:
**DE FR GB**

(30) Priority: **07.11.2005 JP 2005322614**
**16.02.2006 JP 2006039522**

(71) Applicant: **FUJIFILM Corporation**
**Minato-ku**
**Tokyo 106-8620 (JP)**

(72) Inventor: **NAGATE, Hiroshi**
**Fujinomiya-shi**
**Shizuoka 418-8666 (JP)**

(74) Representative: **Grünecker, Kinkeldey, Stockmair & Schwanhäusser**
**Anwaltssozietät**
**Leopoldstrasse 4**
**80802 München (DE)**

(54) **OPTICAL RECORDING MEDIUM AND PROCESS FOR PRODUCING THE SAME**

(57) Provided is an optical recording medium including at least a lower substrate having a servo pit pattern, a recording layer on the lower substrate for recording information by holography, an upper substrate on the recording layer, and a transparent resin layer provided between the upper substrate and the recording layer. Forms in which the transparent resin layer contains any one of a thermosetting resin and a slow-setting UV curable resin, and the like are preferable.

FIG. 3

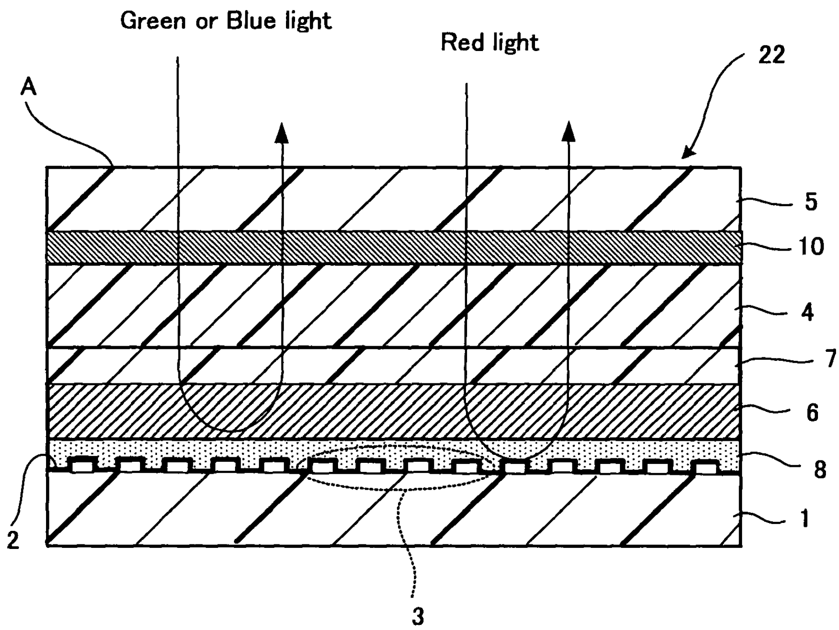


EP 1 950 631 A1

## Description

### Technical Field

The present invention relates to an optical recording medium, in which information is recorded by holography, and a production method thereof.

### Background Art

An optical recording medium is one of the recording media into which a large amount of information, such as high density image data, can be written. Among the optical recording media, for example, rewritable optical recording media such as a magnetic optical disc and phase change optical disc, and write-once optical recording media such as CD-R have been put into practice; however, the demand for further large-capacity optical recording media is increasing. However, conventional optical recording media record information two-dimensionally and thus have a limitation in increasing the recording capacity. Therefore, recently, hologram type optical recording media in which information can be recorded three-dimensionally, have been attracting attention.

In the hologram type optical recording media, generally, information light with a two-dimensional intensity distribution and reference light with an intensity level equal to that of the information light are superimposed inside a photosensitive recording layer to form an interference pattern, and an optical characteristic distribution is produced by means of the interference pattern in the recording layer, whereby information is recorded. Meanwhile, reading (reproducing) of the written information is performed by applying only reference light onto the recording layer from the same direction as in recording and thereby allowing a reproduced light that has an intensity distribution corresponding to the optical characteristic distribution formed in the recording layer to be emitted from the recording layer.

In this hologram type optical recording medium, optical characteristic distribution is formed three-dimensionally in the recording layer, and thus it is possible to partially superimpose a region into which information has been written by one information light and a region into which information has been written by another information light, namely, enabling multiplexing recording. When digital volume holography is utilized in such multiplexing recording, the signal to noise ratio (S/N ratio) at one spot becomes extremely high. Thus, the resulting hologram type optical recording medium can reproduce the original information correctly even if the S/N ratio is lowered to some degree due to overwriting. As a result, the number of multiplexing recording reaches as many as several hundred times, enabling a remarkable increase of the recording capacity of optical recording medium (see Patent Literature 1).

As such a hologram type optical recording medium, for example as shown in FIG.1, an optical recording medium is proposed that contains at least a lower substrate 1 provided with a servo pit pattern 3 on the surface thereof, a reflective film 2 made of e.g. aluminum on the surface of the servo pit pattern, a recording layer 4 containing at least a photopolymer on the reflective film, and an upper substrate 5 on the recording layer (see Patent Literature 2).

However in forming a thick recording layer for the optical recording medium, irregularities and undulations are produced on the recording layer surface. When an upper substrate is provided on such recording layer surface, empty spaces are formed between the recording layer and the upper substrate, which disadvantageously decreases the S/N ratio of a light signal due to scattering of laser light in the empty spaces. In addition, oxygen which penetrated the upper substrate reduces the sensitivity of the recording layer, and/or a low molecular weight compound such as a plasticizer is eluted from the upper substrate to the recording layer to deteriorate the recording layer, resulting in decrease in the sensitivity. Furthermore, a decomposing component is eluted from the recording layer to the upper substrate to decompose the surface of the upper substrate, which scatters light to some extent to reduce the S/N ratio of a light signal. At present solving these problems is awaited.

Patent Literature 1: Japanese Patent Application Laid-Open (JP-A) No. 2002-123949
Patent Literature 2: JP-A No.ll-311936

### Disclosure of Invention

An object of the present invention is to provide a hologram type optical recording medium, which can prevent occurrence of empty spaces between a recording layer and an upper substrate, can improve the S/N ratio of a light signal, can prevent oxygen from reaching the recording layer, and can record high density images, and a production method capable of producing the hologram type optical recording medium efficiently.

Means for solving the above-mentioned problems are as follows:

<1> An optical recording medium, including at least, a lower substrate having a servo pit pattern, a recording layer on the lower substrate for recording information by holography, an upper substrate on the recording layer, and a

transparent resin layer provided between the upper substrate and the recording layer.

<2> The optical recording medium according to item <1>, wherein the transparent resin layer contains any one of a thermosetting resin and a slow-setting ultraviolet (UV) curable resin.

<3> The optical recording medium according to item <2>, wherein the thermosetting resin is at least one resin selected from a phenol resin, a urea resin, a melamine resin, an epoxy resin, an alkyd resin, an unsaturated polyester resin, a diallyl phthalate resin, a urethane resin, and a silicone resin.

<4> The optical recording medium according to item <3>, wherein the thermosetting resin is a resin mixture of a bisphenol A epoxy resin and a bisphenol F epoxy resin.

<5> The optical recording medium according to item <2>, wherein the slow-setting UV curable resin is a cationic slow-setting UV curable resin.

<6> The optical recording medium according to any one of items <1> to <5>, wherein the transparent resin layer has a thickness of 20 μm or more.

<7> The optical recording medium according to any one of items <1> to <6>, wherein the oxygen transmission rate of the transparent resin layer is 1,000 cc/$m^2$·d·atm or less.

<8> The optical recording medium according to any one of items <1> to <7>, wherein a reflective film is provided on the surface of the servo pit pattern.

<9> The optical recording medium according to item <8>, wherein the reflective film is a metal reflective film.

<10> The optical recording medium according to any one of items <1> to <9>, wherein a filter layer is provided between the lower substrate and the recording layer.

<11> The optical recording medium according to item <10>, wherein the filter layer is at least any one of a dichroic mirror layer, a dielectric material deposition layer, and a cholesteric liquid crystal layer.

<12> The optical recording medium according to any one of items <10> and <11>, wherein a first gap layer is provided between the filter layer and the reflective film for smoothing the lower substrate surface.

<13> The optical recording medium according to any one of items <10> to <12>, wherein a second gap layer is provided between the recording layer and the filter layer.

<14> A production method for an optical recording medium, including at least, applying a transparent resin layer composition containing at least a thermosetting resin to any one of a surface of an upper substrate and a surface of a recording layer, bonding the upper substrate to the recording layer with the transparent resin layer composition being sandwiched therebetween, and thermally curing the transparent resin layer composition to form a transparent resin layer. According to the production method of an optical recording medium described in item <14>, the optical recording medium of the present invention can be produced efficiently.

<15> A production method for an optical recording medium, including at least, applying a transparent resin layer composition containing a slow-setting UV curable resin to a surface of an upper substrate, exposing the transparent resin layer composition to UV light, bonding the upper substrate to a recording layer with the transparent resin layer composition being sandwiched therebetween, and allowing the transparent resin layer composition to cure to form a transparent resin layer. In the production method of the optical recording medium according to item <15>, since the transparent resin layer composition contains a slow-setting UV curable resin which does not change its viscosity or is not cured for a while after the exposure to UV light, the upper substrate is not required to be bonded to the recording layer hastily, and the transparent resin layer with an appropriate thickness can be efficiently formed without exposing it to UV light after bonding.

The optical recording medium according to the present invention contains at least a lower substrate having a servo pit pattern, a recording layer on the lower substrate for recording information by holography, an upper substrate on the recording layer, wherein at least one layer of transparent resin layer is provided between the upper substrate and the recording layer.

According to the optical recording medium of the present invention, by providing the above components, occurrence of empty spaces between the recording layer and the upper substrate can be prevented, the SIN ratio of a light signal can be improved, and high density image recording is made possible. In addition by providing a transparent resin layer between the upper substrate and the recording layer, the transparent resin layer acts as a barrier layer to prevent oxygen from reaching the recording layer, enabling prevention of decrease in the sensitivity of the recording layer. Further, the transparent resin layer prevents a low molecular weight compound, such as a plasticizer, from eluting from the upper substrate to the recording layer to prevent decrease in the sensitivity due to deterioration of the recording layer. Furthermore, the transparent resin layer blocks elution of decomposing components from the recording layer to the upper substrate, enabling prevention of decrease in the S/N ratio of a light signal by preventing the upper substrate from decomposing and preventing the light scatter.

Brief Description of Drawings

FIG. 1 is a schematic cross-sectional view showing the structure of a conventional optical recording medium.

FIG. 2 is a schematic cross-sectional view showing an example of an optical recording medium according to the first embodiment of the invention.

FIG. 3 is a schematic cross-sectional view showing an example of an optical recording medium according to the second embodiment of the invention.

FIG. 4 is a graph showing reflection characteristics of a filter layer, which is a laminate of three cholesteric liquid crystal layers, for incident light from the vertical direction (0°).

FIG. 5 is a graph showing reflection characteristics of a filter layer, which is a laminate of three cholesteric liquid crystal layers, for incident light from an oblique direction (40°).

FIG. 6 is a graph showing reflection characteristics of a filter layer, which is a laminate of two cholesteric liquid crystal layers, for incident light from the vertical direction (0°).

FIG. 7 is a graph showing reflection characteristics of a filter layer, which is a laminate of two cholesteric liquid crystal layers, for incident light from an oblique direction (20°).

FIG. 8 is an explanatory diagram showing an example of the optical system around the optical recording medium according to the invention.

FIG. 9 is a block diagram showing an example of the entire configuration of the optical recording and reproducing apparatus equipped with the optical recording medium according to the invention.

Best Mode for Carrying Out the Invention

(Optical recording medium)

The optical recording medium of the present invention contains a lower substrate, a recording layer on the lower substrate, an upper substrate on the recording layer, a transparent resin layer between the upper substrate and the recording layer, a reflective film, a filter layer, a first gap layer, a second gap layer, and other layers as required.

<Transparent resin layer>

The transparent resin layer contains any one of a thermosetting resin and a slow-setting UV curable resin, and further other components as required. In addition to the thermosetting resins and the slow-setting UV curable resins, thermoplastic resins such as polyethylene and polypropylene can be used for the transparent resin layer, as far as they do not impair the objects and the working effects of the present invention.

The thermosetting resins are not particularly limited, as far as they are transparent and thermosetting, can be selected suitably depending on the purpose, and include, for example, phenol resins, urea resins, melamine resins, epoxy resins, alkyd resins, unsaturated polyester resins, diallyl phthalate resins, urethane resins, and silicone resins. These may be used alone or in combination. Among these, epoxy resins are preferable. For the epoxy resins, for example, a resin mixture of a bisphenol A epoxy resin and a bisphenol F epoxy resin is suitable.

The slow-setting UV curable resins are not particularly limited, as far as they are transparent resins that do not harden at the instant of UV irradiation but harden at a later time after the irradiation, can be selected suitably depending on the purpose, and are preferably cationic slow-setting UV curable resins, such as photocationic polymerization epoxy resins, photocationic polymerization vinyl ether resins, and photocationic polymerization oxetane resins. These may be used alone or in combination.

For such cationic slow-setting UV curable resins, commercially available products can be used, such as, "Daicure Clear EX-4016" (manufactured by DAINIPPON INKAND CHEMICALS, INCORPORATED), "SCR-710" (manufactured by JSR Corporation), "HS-674" (manufactured by ADEKA CORPORATION), and "SOMOS8100" (manufactured by Ciba Specialty Chemicals Inc.).

The oxygen transmission rate of the transparent resin layer is preferably 1,000 cc/$m^2$·d·atm or less, and more preferably 0.1 cc/$m^2$.d.atm to 100 cc/$m^2$.d.atm. When the oxygen transmission rate is above 1,000 cc/$m^2$.d.atm, the sensitivity of the recording layer sometimes degrades.

The oxygen transmission rate can be measured, for example, by an oxygen transmission rate equal pressure method (JIS K7126, or ASTM D3985), in which the sample is sandwiched between oxygen flow and nitrogen flow each at about an atmospheric pressure and the transmitted oxygen is measured.

The thickness of the transparent resin layer is preferably 20 μm or more, and more preferably 20 μm to 100 μm. When the thickness is less than 20 μm, the transparent resin layer sometimes fails to compensate the thickness

variations over the hologram recording layer surface to cause some distortion of the upper substrate. When the thickness is above 100 μm, hologram record reproducing laser light and servo laser light sometimes do not accurately focus because of the thick transparent resin layer.

The formation method of the transparent resin layer will be described in detail in the description of the production method of the optical recording medium of the present invention described later.

<Upper substrate and lower substrate>

The shape, structure, size, and the like of the upper substrate and the lower substrate are not particularly limited and can be appropriately selected depending on the purpose; examples of the shape of the substrates include a disc shape and card-like shape, and the shape that can ensure the mechanical strength of the resultant optical recording medium needs to be selected. In addition, when light for recording and reproduction is incoming through the substrate, the substrate needs to be transparent enough to admit such light of used wavelengths.

The materials for the substrates are not particularly limited, can be selected appropriately depending on the purpose, and, for example, any one of inorganic materials and organic materials may be appropriately used, as far as the material can ensure the mechanical strength of the optical recording medium and is transparent enough to admit such light of used wavelengths, when light for recording and reproduction is incoming through the substrate (when the substrate is a transmission type).

Examples of the inorganic materials include glass, quartz and silicon.

Examples of the organic materials include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinyl chloride resins, polyvinylidene chloride resins, polyacrylic resins, polylactate resins, plastic film laminate paper, and synthetic paper. These may be used alone or in combination. Among these, polycarbonate resins and acrylic resins are preferable in light of their formability, optical characteristics, and costs.

The substrates may be either an appropriately synthesized one or a commercially available product.

The thickness of the substrates is not particularly limited, can be appropriately selected depending on the purpose, and is preferably 0.1 mm to 5 mm, and more preferably 0.3 mm to 2 mm. When the thickness of the substrate is less than 0.1 mm, the substrate sometimes fails to prevent the shape distortion during a storage period of the disc. When the thickness is above 5 mm and the disc is rotated, for example, by a drive motor for use, an excess load is sometimes applied to the drive motor because the weight of the entire disc becomes large.

Multiple numbers of address-servo areas - addressing areas linearly extending in the radial direction of the substrate - are provided on the lower substrate at given angles to one another, and each fan-shaped area between adjacent address-servo areas serves as a data area. In the address-servo areas, information for performing a focus servo operation and a tracking servo operation by means of a sampled servo system and address information are previously recorded (or pre-formatted) in the form of emboss pits (servo pits). The focus servo operation can be performed using a reflective surface of the reflective film. For the information for the tracking servo operation, for example, wobble pits can be used. There is no need to provide a servo pit pattern in a case where the optical recording medium is a card-like shape.

<Recording layer>

The recording layer is a layer in which information can be recorded by holography. Materials that can undergo changes in their optical characteristics (e.g., absorption index and/or refractive index) upon irradiation with electromagnetic rays with predetermined wavelength according to the intensity of the electromagnetic rays are used.

The material for the recording layer is not particularly limited, can be appropriately selected depending on the purpose, and includes, for example, (1) photopolymers which are highly-polymerized as a result of polymerization reaction upon irradiation with light, (2) photorefractive materials that offer a photorefractive effect - an effect that a space-charge distribution is generated as a result of light irradiation, and the refractive index is altered), (3) photochromic materials that undergo changes in refractive index upon irradiation with light, caused by isomerization of their molecules, (4) inorganic materials such as lithium niobate, and barium titanate, and (5) chalcogen materials. Among these, photopolymers (1) are particularly preferable.

The photopolymer (1) is not particularly limited and can be appropriately selected depending on the purpose. For example, the photopolymer contains a monomer and a photoinitiator and contains a matrix and further as required additional components such as sensitizers and oligomers.

For the photopolymer, for example, those described in the following can be used: "Photopolymer Handbook" (published by Kogyo Chosakai Publishing Inc., 1989), "Photopolymer Technology" (published by THE NIKKAN KOGYO SHIMBUN LTD., 1989), SPIE Journals and Proceedings Vol. 3010 on pp 354-372 (1997), and SPIE Journals and

Proceedings Vol. 3291 pp 89-103 (1998). In addition, it is also possible to use the photopolymers described in U.S. Patent Nos. 5,759,721, 4,942,112, 4,959,284, and 6,221,536,; International Publication Nos. WO/97/44714, 97/13183, 99/26112, and 97/13183; Japanese Patent (JP-B) Nos. 2880342, 2873126, 2849021, 3057082, and 3161230; and JP-A Nos. 2001-316416 and 2000-275859.

Examples of the method for applying recording light to the photopolymer to change the optical characteristics thereof include a method utilizing diffusion of low-molecular components. In addition, in order to mitigate change in volume of the photopolymer at the time of polymerization, a component that diffuses in the direction opposite to the direction in which polymerized components are diffused may be added, or a compound having a structure that breaks up by treatment with acids may be added in addition to polymers. When the recording layer is formed using a photopolymer containing the low-molecular component, the recording layer may need a structure that can retain liquid therein. Moreover, when the compound having a structure that breaks up by treatment with acids is added, the change in volume of the photopolymer may be constrained by counterbalancing expansion caused by the structure break up and shrinkage caused by polymerization of monomers.

The monomer is not particularly limited and can be appropriately selected in depending on the purpose; examples thereof include radical polymerizable monomers having an unsaturated bond such as an acrylic group and methacrylic group, and cationic polymerizable monomers having an ether structure such as an epoxy ring and oxetane ring. Each of these monomers may be monofunctional or polyfunctional. Photocrosslinking monomers may also be used.

Examples of the radical polymerizable monomer include acryloylmorpholine, phenoxyethylacrylate, isobornylacrylate, 2-hydroxypropylacrylate, 2-ethylhexylacrylate, 1,6-hexanedioldiacrylate, tripropyleneglycol diacrylate, neopentylglycol PO-modified diacrylate, 1,9-nonanedioldiacrylate, hydroxy pivalic acid neopentylglycol diacrylate, EO-modified bisphenol A diacrylate, polyethyleneglycol diacrylate, pentaerythritol triacrylate, pentaerythritol tetraacrylate, pentaerythritol hexaacrylate, EO-modified glycerol triacrylate, trimethylol propane triacrylate, EO-modified trimethylol propane triacrylate, 2-naphtho-1-oxyethyl acrylate, 2-carbazoil-9-yl-ethylacryate, (trimethylsilyloxy) dimethylsilylpropyl acrylate, vinyl-1-naphthoate, and N-vinyl carbazole.

Examples of the cationic polymerizable monomer include bisphenol A epoxy resins, phenol novolac epoxy resins, glycerol triglycidyl ether, 1,6-hexane glycidyl ether, vinyltrimethoxysilane, 4-vinylphenyl trimethoxysilane, γ-methacryroxypropyl triethoxysilane, and compounds represented by the following formulas (A) to (E).

These monomers may be used alone or in combination.

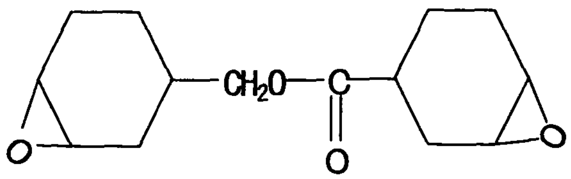

Structural Formula (A)

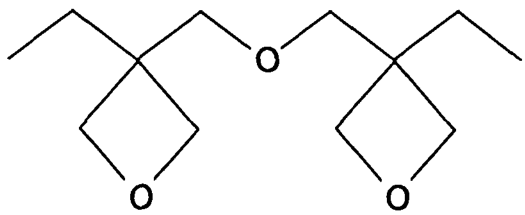

Structural Formula (B)

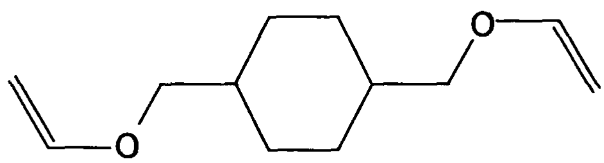

Structural Formula (C)

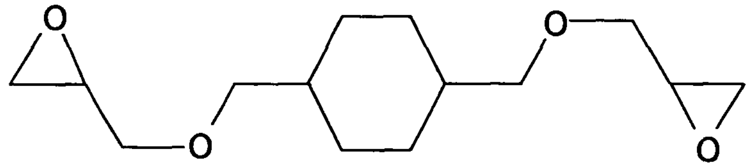

Structural Formula (D)

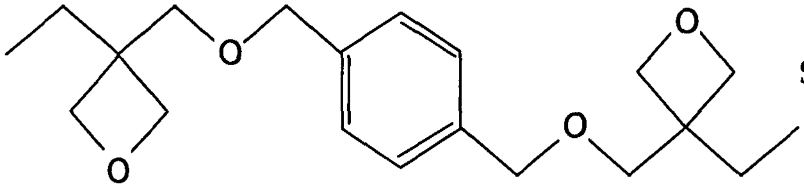

Structural Formula (E)

The photoinitiator is not particularly limited as far as it is sensitive to recording light, and examples thereof include materials that can trigger radical polymerization, cationic polymerization, and crosslinking reactions by irradiation with light.

Examples of the photoinitiator include 2,2'-bis(o-chlorophenyl)-4, 4', 5, 5'-tetraphenyl-1, 1'-biimidazole, 2, 4, 6-tris(trichloromethyl)-1, 3, 5-triazine, 2, 4-bis (trichloromethyl)-6-(p-methoxyphenylvinyl)-1, 3, 5-triazine, diphenyl iodonium tetrafluoroborate, diphenyl iodonium hexafluorophosphate, 4, 4'-di-t-butylphenyl iodonium tetrafluoroborate, 4-diethylaminophenylbenzene diazonium hexafluorophosphate, benzoin, 2-hydroxy-2-methyl-1-phenylpropane-2-one, benzophenon, thioxanthone, 2, 4, 6-trimethyl benzoyl diphenyl acyl phosphine oxide, triphenyl butylborate tetraethylammonium, and the titanocene compound represented by the following formula. These photoinitiators may be used alone or in combination. In addition, sensitizing dyes may be used together with the photoinitiator, depending on the wavelength of light to be applied.

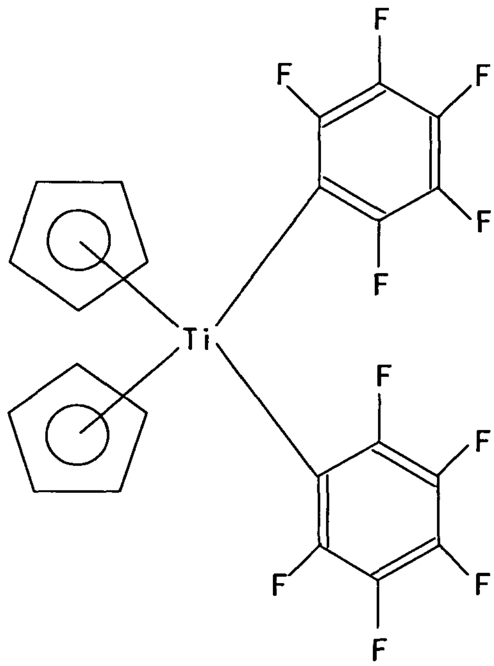

The matrix is used in order to increase coating capability, strength of the resultant film, and holographic recording characteristics, and is appropriately selected in view of its compatibility with hologram material.

The matrix is not particularly limited, can be appropriately selected depending on the purpose, is preferably a thermosetting matrix, and includes, for example, urethane resins formed from an isocyanate compound and an alcohol compound, epoxy compounds formed from oxirane compounds; melamine compounds; formalin compounds; ester compounds of unsaturated acids such as (meth) acrylic acid and itaconic acid, and polymers of amide compounds.

The matrix may be hardened by heat treatment or by usage of a catalyst.

The amount of the matrix in the recording layer is preferably 10% by mass to 95% by mass, more preferably 35% by mass to 90% by mass. If the amount of the matrix is less than 10% by mass, interference images may not be obtained stably, whereas if the amount exceeds 95% by mass, it may result in poor diffraction efficiency.

The photopolymer can be obtained by stirring and mixing the monomer, the photoinitiator, the matrix, and other components as required to allow them to react with one another.

The photorefractive materials (2) are not particularly limited as far as they offer a photorefractive effect, and can be appropriately selected depending on the purpose. For example, the photorefractive materials contain charge generating material and charge transporting material, and further contain additional components as required.

The charge generating material is not particularly limited and can be appropriately selected depending on the purpose; examples thereof include phthalocyanine dyes or pigments such as metal phthalocyanine, metal-free phthalocyanine and derivatives thereof; naphthalocyanine dyes or pigments; azo dyes or pigments such as monoazo , disazo and trisazo dyes and pigments; pelylene dyes or pigments; indigo dyes or pigments; quinacridone dyes or pigments; polycyclic quinone dyes or pigments such as anthraquinones, and Anthanthron; cyanine dyes or pigments; charge-transfer complexes composed of an electron-accepting substance and an electron-donating substance as typified by TTF-TCNQ; azulenium salts; fullerenes as typified by $C_{60}$ and $C_{70}$ and metanofullerenes, derivatives of fullenerens. These may be used alone or in combination.

The charge transporting material is material carrying holes or electrons, and may be a low molecular weight compound or a high-molecular-weight compound.

The charge transporting material is not particularly limited and can be appropriately selected depending on the purpose; examples thereof include nitrogen-containing cyclic compounds such as indoles, carbazoles, oxazoles, inoxazoles, thiazoles, imidazoles, pyrazoles, oxadiazoles, pyrazolines, thiadiazoles and triazoles or derivatives thereof; hydrazone compounds; triphenyl amines; triphenylmethanes; butadienes; stilbenes; quinone compounds such as anthraquinon diphenoquinons or derivatives thereof; fullerenes such as $C_{60}$ and $C_{70}$ and derivatives thereof; $\pi$ conjugate polymers or oligomers such as polyacetylenes, polypyrroles, polythiophenes and polyanilines; $\sigma$ conjugate polymers or oligomers such as polysilanes and polygermanes; and polycyclic aromatic compounds such as anthracenes, pyrenes, phenanthrenes, and coronenes. These charge transporting materials may be used alone or in combination.

The photochromic materials (3) are not particularly limited as far as they can induce a photochromic reaction, and can be appropriately selected depending on the purpose; examples thereof include azobenzene compounds, stilbene compounds, indigo compounds, thioindigo compounds, spiropyran compounds, spirooxazine compounds, fulgide compounds, anthracenes compounds, hydrazone compounds and cinnamic acid compounds. Of these compounds, azobenzene derivatives and stilbene derivatives, which undergo structural changes as a result of cis-trans isomerism upon irradiation with light; and spiropyran derivatives and spirooxazine derivatives, which undergo structural changes (ring-opening and ring-closure) upon irradiation with light, are particularly preferable.

Examples of the chalcogen materials (5) include materials containing chalcogen element-containing chalcogenide glass plus metal particles which are dispersed in the chalcogenide glass and which can upon irradiation with light diffuse in the chalcogenide glass.

The chalcogenide glass is not particularly limited as far as it is composed of a nonoxide amorphous material containing a chalcogen element such as S, Te, or Se and metal particles can be photo-doped therein.

Examples of amorphous materials containing chalcogen elements include Ge-S glass, As-S glass, As-Se glass and As-Se-Ce glass. Of these, Ge-S glass is preferably used. When Ge-S glass is used for the chalcogenide glass, the atomic ratio between Ge and S in the Ge-S glass can be suitably changed depending on the wavelength of light to be applied. However, chalcogenide glass composed primarily of a chemical composition represented by $GeS_2$ are preferably used.

The metal particles are not particularly limited as far as they can be photo-doped in the chalcogenide glass upon irradiation with light, and can be appropriately selected depending on the intended use; examples thereof include Al, Au, Cu, Cr, Ni, Pt, Sn, In, Pd, Ti, Fe, Ta, W, Zn and Ag. Among these, Ag, Au, and Cu have properties which make them more likely to be photo-doped in chalogenide glass, and Ag is particularly preferable because it has excellent photodoping performance.

The amount of the metal particles dispersed in the chalcogenide glass is preferably 0.1% by volume to 2.0% by volume, more preferably 0.1% by volume to 1.0% by volume of the total volume of the recording layer. If the amount of the metal particles is less than 0.1°/ by volume, the change in transmittance as a result of photodoping is insufficient,

which may result in the reduction in the recording accuracy. Whereas if the amount of the metal particles is more than 2.0% by volume, the light transmittance of the recording material decreases, leading to unsatisfactory photodoping in some cases.

The recording layer can be formed according to known methods depending on the material, and for example can be appropriately formed by an injection method, a vapor deposition method, a wet deposition method, a MBE (molecular beam epitaxy) method, a cluster ion beam method, a molecular laminate method, a LB method, a printing method and a transfer method. Among these methods, an injection method and a wet deposition method are preferable. The injection method will be described in the production method of the optical recording medium of the present invention described later.

Formation of the recording layer by means of the wet deposition method can be performed by using a coating solution obtained by dissolving and/or dispersing the recording layer material in a solvent, (i.e., by applying the coating solution on a support and drying it). The wet deposition method is not particularly limited and can be appropriately selected from those known in the art depending on the purpose; examples thereof include an ink-jet method, spin coating method, kneader coating method, bar coating method, blade coating method, casting method, dipping method, and curtain coating method.

The thickness of the recording layer is not particularly limited and can be appropriately selected depending on the purpose; the thickness of the recording layer is preferably 100 μm or more, more preferably 100 μm to 900 μm. When the thickness of the recording layer is within a preferable range, it will result in sufficient S/N ratios even when 10- to 300-fold shift-multiplexing recording operation is performed; more remarkable S/N ratios can be obtained in a more preferable thickness range.

<Filter layer>

The filter layer is placed on a lower substrate and under the recording layer.

The filter layer has a wavelength-selective reflection function, in which only light of a specific wavelength is reflected among multiple species of light. Particularly, the filter layer does not cause fluctuations in the wavelengths selected to be reflected in a case where the incident angle is changed, has a function to prevent irregular reflection of the information light and reference light at the refractive film of an optical recording medium to thereby prevent the occurrence of noise. Laminating the filter layer in the optical recording medium will lead to optical recording of high-resolution and excellent diffraction efficiency.

The filter layer is not particularly limited and can be appropriately selected depending on the purpose. For example, the filter layer is a laminate of at least any one of a dichroic mirror layer, a dielectric material deposition layer, a single-layered or multilayered cholesteric layer and additional layers appropriately selected as required.

The filter layer may be directly applied and deposited onto the support together with the recording layer. Alternatively, the filter layer may be previously deposited on a base material such as a film to prepare a filter layer for optical recording media, and the filter layer may be deposited on the support.

- Dichroic mirror layer -

Preferably, a plurality of the dichroic mirror layers are laminated in order to prepare a wavelength-selective reflection layer. The number of laminated layers is preferably 1 layer to 50 layers, more preferably 2 layers to 40 layers, most preferably 2 layers to 30 layers. When the number is more than 50, the production efficiency tends to be degraded due to vapor deposition onto multiple layers, the change rate of the spectral transmission is reduced, thus the effect per increasing layer number becomes small.

The material for the dichroic mirror layer is not particularly limited, can be appropriately selected depending on the purpose, and includes, for example, Ag, Au, Pt, Al, Cu, or alloys thereof.

The method for laminating the dichroic mirror layers is not particularly limited and can be appropriately selected depending on the purpose; examples of the method include a physical vapor deposition (PVD) method such as a vacuum vapor deposition method, a sputtering method, an ion plating method, an ion beam method, an ion assisted deposition method and a laser ablation method; and a chemical vapor deposition (CVD) method such as a heat CVD method, a photo CVD method and a plasma CVD method. Among these methods, the physical vapor deposition (PVD) method is preferable, and the sputtering method is most preferable.

As for the sputtering method, a DC sputtering method is preferable because it offers high deposition rate. Preferably, highly conductive material is used when the DC sputtering method is employed.

Examples of the method for depositing multiple layers by the sputtering method include (1) a single-chamber method, where multiple target materials are alternately or sequentially deposited using a single chamber, and (2) a multi-chamber method, where multiple dicroic mirror layers are sequentially deposited using multiple chambers. In view of the productivity and to prevent contamination among materials, the multi-chamber method is most preferable.

The thickness of the dichroic mirror layer is preferably λ/16 to λ, more preferably λ/8 to 3λ/4, most preferably λ/6 to 3λ/8 in terms of optical wavelength.

-Dielectric material deposition layer-

The dielectric material deposition layer is, for example, a laminate of multiple dielectric thin layers with different refraction indices. For the dielectric material deposition layer to serve as a reflective film through which light of desired wavelength passes, it is preferably a laminate of alternating dielectric thin layers with high and low indices of refraction; however, three or more different dielectric thin layers may be laminated.

The number of the dielectric thin layers to be laminated is preferably 2 to 20, more preferably 2 to 12, still further preferably 4 to 10, most preferably 6 to 8. If the number of the dielectric thin layers to be laminated is greater than 20, it results in the reduction in productivity because of multilayer vapor deposition. In such case, the object and effect of the present invention sometimes cannot be achieved.

The order in which the dielectric thin layers are laminated is not particularly limited and can be appropriately selected depending on the purpose. For example, a dielectric thin layer with low refractive index is first deposited in a case where an adjacent dielectric thin layer has high refractive index. On the other hand, a dielectric thin layer with high refractive index is first deposited in a case where an adjacent dielectric thin layer has low refractive index. The criteria of refractive index for determining whether a dielectric thin layer has high or low refractive index is preferably set to 1.8; note, however, that this determination is made on an arbitrary basis. That is, dielectric thin layers with different refractive indices equal to or greater than 1.8 (i.e., there are dielectric thin layers with high and low refractive indices) may be used to form such a laminate.

The material for the dielectric thin layer with high refractive index is not particularly limited and can be appropriately selected depending on the purpose; examples thereof include $Sb_2O_3$, $Sb_2S_3$, $Bi_2O_3$, $CeO_2$, $CeF_3$, $HfO_2$, $La_2O_3$, $Nd_2O_3$, $Pr_6O_{11}$, $Sc_2O_3$, SiO, $Ta_2O_5$, $TiO_2$, TlCl, $Y_2O_3$, ZnSe, ZnS and $ZrO_2$. Among these, $Bi_2O_3$, $CeO_2$, $CeF_3$, $HfO_2$, SiO, $Ta_2O_5$, $TiO_2$, $Y_2O_3$, ZnSe, ZnS and $ZrO_2$ are preferable, and SiO, $Ta_2O_5$, $TiO_2$, $Y_2O_3$, ZnSe, ZnS and $ZrO_2$ are more preferable.

The material for the dielectric thin layer with low refractive index is not particularly limited and can be appropriately selected depending on the purpose; examples thereof include $Al_2O_3$, $BiF_3$, $CaF_2$, $LaF_3$, $PbCl_2$, $PbF_2$, LiF, $MgF_2$, MgO, $NdF_3$, $SiO_2$, $Si_2O_3$, NaF, $ThO_2$ and $ThF_4$. Among these, $Al_2O_3$, $BiF_3$, $CaF_2$, $MgF_2$, MgO, $SiO_2$ and $Si_2O_3$ are preferable, and $Al_2O_3$, $CaF_2$, $MgF_2$, MgO, $SiO_2$ and $Si_2O_3$ are more preferable.

Note that the atomic ratio in the material for the dielectric thin layer is not particularly limited and can be appropriately selected depending on the purpose. The atomic ratio can be adjusted by changing the concentration of atmosphere's gas upon deposition of dielectric thin layers.

The method for laminating the dielectric thin layers is not particularly limited and can be appropriately selected depending on the purpose; examples of the method include a physical vapor deposition (PVD) method such as a vacuum vapor deposition method, a sputtering method, an ion plating method, an ion beam method, an ion assisted deposition method and a laser ablation method; and a chemical vapor deposition (CVD) method such as a heat CVD method, a photo CVD method and a plasma CVD method. Among these methods, the physical vapor deposition (PVD) method is preferable, and the sputtering method is most preferable.

As for the sputtering method, a DC sputtering method is preferable because it offers high deposition rate. Preferably, highly conductive material is used when the DC sputtering method is employed.

Examples of the method for depositing multiple layers by the sputtering method include (1) a single-chamber method, where multiple target materials are alternately or sequentially deposited using a single chamber, and (2) a multi-chamber method, where multiple dielectric thin layers are sequentially deposited using multiple chambers. In view of the productivity and to prevent contamination among materials, the multi-chamber method is most preferable.

The thickness of the dielectric thin layer is preferably λ/16 to λ, more preferably λ/8 to 3λ/4, most preferably λ/6 to 3λ/8 in terms of optical wavelength.

As for the dielectric vapor deposition layer, a portion of light propagating through the dielectric vapor deposition layer is reflected at the respective dielectric vapor deposition layers in a multiple manner, the respective reflected light interferes each other, as a result allowing selectively to transmit only the light having the wavelength defined by the product of the thickness of the dielectric vapor deposition layer and the refractive index of the film for the light. In addition, the central transmission wavelength of the dielectric vapor deposition layer represents an angular dependence with respect to incident light, thus the transmission wavelength may be changed by altering the incident light.

- Cholesteric liquid crystal layer -

The cholesteric liquid crystal layer contains at least a nematic liquid crystal compound and a chiral compound, and also contains polymerizable mononers and other components as required.

The cholesteric liquid crystal layer may be of single-layered or multi-layered. The number of the laminated layers in the multi-layered configuration is not particularly limited and may be appropriately selected depending on the purpose; for example, the number of the laminated layer is preferably 2 to 10. When the number exceeds 10, the production efficiency may be lowered due to overload for the coating, possibly resulting in less achievement of the purpose and effect of the present invention.

The cholesteric liquid crystal layer preferably displays a circularly polarized light separating function. The cholesteric liquid crystal layer with the circularly polarized light separating function selectively reflects only light components which have been circularly polarized in the direction in which the liquid crystal helix rotates (i.e., to the right or left) and which have a wavelength that equals to the pitch of the liquid crystal helix. The cholesteric liquid crystal layer utilizes the selective reflection characteristics to separate a particular circularly polarized component of a particular wavelength from natural light of a given band of wavelengths, and reflects the other light components. Accordingly, it is preferred that each of the cholesteric liquid crystal layers transmits the first light and reflects the circularly polarized light of the second light different from the first light, and it is preferred that the wavelength of the first light is 350 nm or more to less than 600 nm, and the wavelength of the second light is 600 nm or more to 900 nm or less.

Typically, the cholesteric liquid crystal layer may exhibit the selective reflectivity for only a certain wavelength region rather than for wavelengths of the entire visible lights. That is, the wavelength width $\Delta\lambda$ of the selective reflection region of the cholesteric liquid crystal layer may be expressed by the Equation (1) below.

$$\Delta\lambda = 2\lambda(ne - no)/(ne + no) \quad : \text{Equation (1)}$$

wherein "no" represents the refractive index of the nematic liquid crystal molecules for normal light, contained in the cholesteric liquid crystal layer, "ne" represents the refractive index of the nematic liquid crystal molecules for abnormal light, and $\lambda$ represents the central wavelength of light selectively reflected.

As expressed by the Equation (1), the wavelength width $\Delta\lambda$ of the selective reflection region depends on the molecular configuration itself of the nematic liquid crystal. It is understood from the Equation (1) that larger (ne - no) may extend the wavelength width $\Delta\lambda$; however, (ne - no) is typically 0.3 or less, and the value higher than 0.3 may make difficult the practical application since other functions as liquid crystals such as orientation characteristic and liquid crystal temperature are likely to be insufficient. Accordingly, the wavelength width $\Delta\lambda$ of the selective reflection region of the cholesteric liquid crystal layer is practically about 150 nm at most, usually is preferably 30 nm to 100 nm.

The central wavelength $\lambda$ of selective reflection of the cholesteric liquid crystal layer may be expressed by the Equation (2) below.

$$\lambda = (ne + no)P/2 \quad : \text{Equation (2)}$$

wherein "ne" and "no" represent the same meanings with those in the Equation (1); "P" represents a helix pitch length corresponding to one rotational torsion of the cholesteric liquid crystal layer.

As shown in Equation (2), the central wavelength $\lambda$ of selective reflection depends on the average refractive index of the cholesteric liquid crystal layers and the helix pitch length P, provided that the helix pitch of the cholesteric liquid crystal layer being constant. In order to enhance the selective reflectivity of the cholesteric liquid crystal layer, therefore, it is preferred that each of the cholesteric liquid crystal layers represents different central wavelengths of the selective reflectivity each other and also that the helical rotation directions (right or left) are the same for the respective cholesteric liquid crystal layers. It is also preferred that the regions of selective reflection wavelength are successive with respect to the respective cholesteric liquid crystal layers. The term "successive" as used herein means that there exists no gap between adjacent two regions of selective reflection wavelength and the regions represent substantially a reflective index of 40% or more.

Accordingly, it is preferred that the distances between the central wavelength X of selective reflections are such that each of the regions of selective reflection wavelength is successive with at least one of other regions of selective reflection wavelength.

The filter layer for optical recording medium preferably has an optical reflectivity of 40% or more for a wavelength range of $\lambda_0$ to $\lambda_0$/cos20° (where $\lambda_0$ represents the wavelength of irradiation light) incident at an angle of ±20° (measured from the normal of the surface of the recording layer). Most preferably, the filter layer for optical recording media has an optical reflectivity of 40% or more for a wavelength range of $\lambda_0$ to $\lambda_0$/cos40° (where $\lambda_0$ represents the wavelength of irradiation light) incident at an angle of ±40° (measured from the normal of the surface of the recording layer).

When the optical reflectivity is 40% or more for a wavelength range of $\lambda_0$ to $\lambda_0$/cos20°, especially $\lambda_0$ to $\lambda_0$/cos40°

(where $\lambda_0$ represents the wavelength of irradiation light), the angle dependency to reflect the irradiation light may be eliminated and thus conventional optical lens systems for usual optical recording media may be employed.

Specifically, a filter layer may be produced that has the reflective property as shown in FIG. 4 by way of laminating three cholesteric liquid crystal layers of which the central wavelengths of selective reflectivity are different each other and the helical rotation directions of the respective cholesteric liquid crystal layers are the same each other. FIG. 4 shows that the reflectivity of the normal incident light from front side (0°) is 40% or more. On the other hand, as the direction of the incident light being inclined, a shift toward shorter wavelength develops gradually; FIG. 5 shows the reflectivity at the angle 40 ° inclined in the liquid crystal layer.

Similarly, a filter layer may be produced that has the reflective property as shown in FIG. 6 by way of laminating two cholesteric liquid crystal layers of which the central wavelengths of selective reflectivity are different each other and the helical rotation directions of the respective cholesteric liquid crystal layers are the same each other. FIG. 6 shows that the reflectivity of the normal incident light from front side (0°) is 40% or more. On the other hand, as the direction of the incident light being inclined, a shift toward shorter wavelength develops gradually; FIG. 7 shows the reflectivity at the angle 20° inclined in the liquid crystal layer.

Note that with respect to the reflection range of $\lambda_0$ to $1.3\lambda_0$ shown in FIG. 4, $1.3\lambda_0$ equals to 692 nm when $\lambda_0$ is 532 nm, and thus a servo light of wavelength 655 nm is undesirably reflected. This reflection range is set in view of light incident at an angle of $\pm 40°$. However, when such light that is incident at larger angles is to be used, a servo operation can be performed with no problems by using a servo light incident at an angle of within $\pm 20°$ that has been masked. In addition, by securing larger average refractive index in each cholesteric liquid crystal layer in the filter layer used, it is also possible to readily cover a servo light incident to the filter layer at an angle of within $\pm 20°$. In that case, it is only necessary to prepare a laminate of two cholesteric liquid crystal layers with a reflection range of $\lambda_0$ to $1.1\lambda_0$ as shown in FIG. 6. Thus, transmittance of the servo light entails no difficulty.

Accordingly, the results shown in FIGs. 4 to 7 may assure the reflectivity of 40% or more even when the incident wavelength being inclined 0° to 20°, preferably 0° to 40° in the filter layer for optical recording media according to the present invention, filter layers may be provided with no problems for reading signals.

The respective cholesteric liquid crystal layers are not particularly limited, as far as they satisfy the above properties and may be appropriately selected depending on the purpose; the cholesteric liquid crystal layers contain a nematic liquid crystal compound and a chiral compound, and further contain polymerizing monomers and other components as required.

- Nematic liquid crystal compound -

The nematic liquid crystal compounds feature that their liquid crystal phase solidifies under their liquid crystal transition temperatures, and may be appropriately selected from liquid crystal compounds, high-molecular-weight liquid crystal compounds and polymerizable liquid crystal compounds, all of which have refractive index anisotropy $\Delta n$ of 0.10 to 0.40, depending on the purpose. For example, molecules of such nematic liquid crystal compounds in a liquid crystal state may be aligned on a substrate treated for the alignment such as rubbing, followed by cooling to immobilize the molecules for an available solid phase.

The nematic liquid crystal compounds are not particularly limited, may be appropriately selected depending on the purpose, and include, for example, the following compounds.

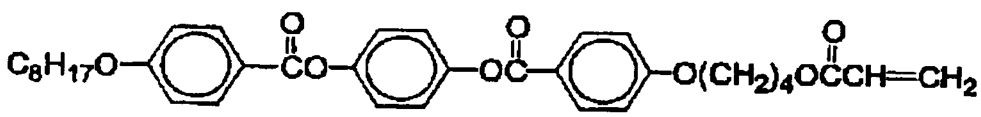

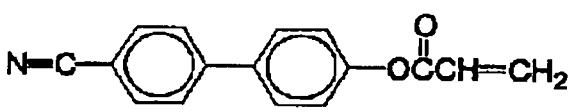

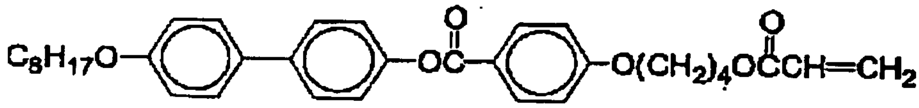

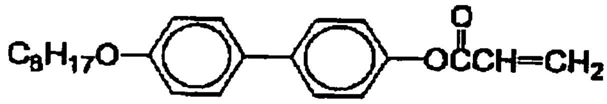

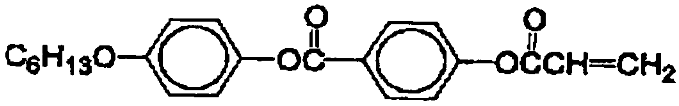

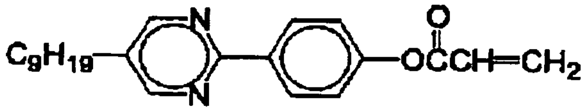

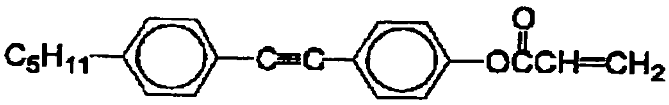

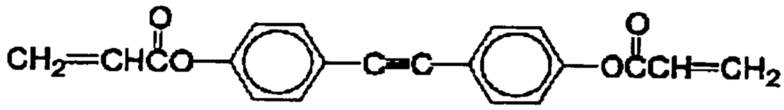

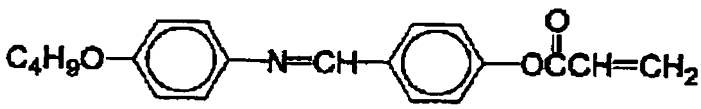

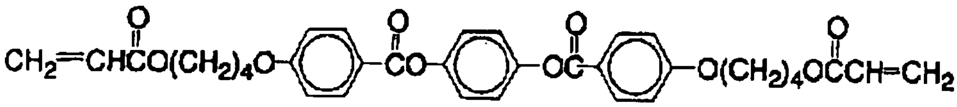

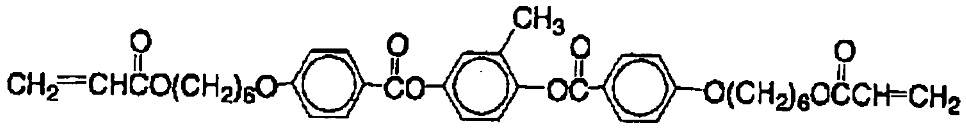

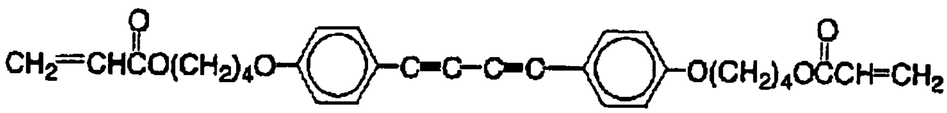

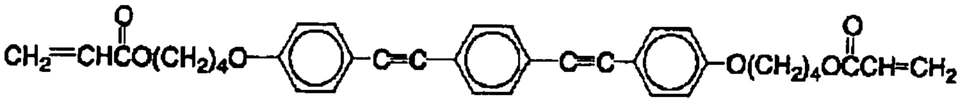

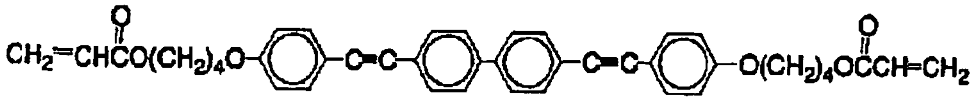

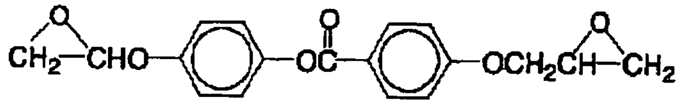

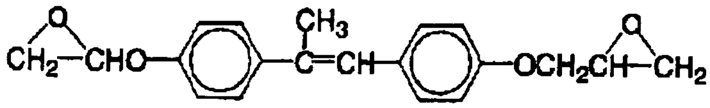

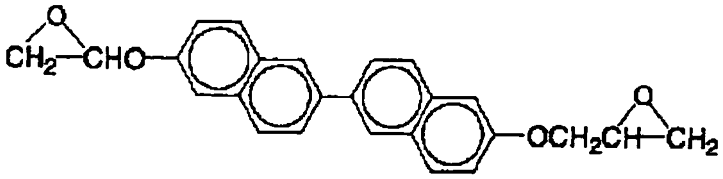

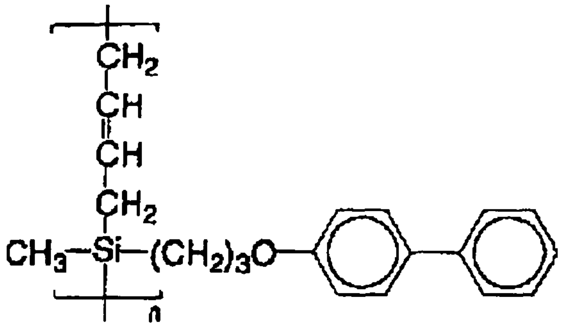

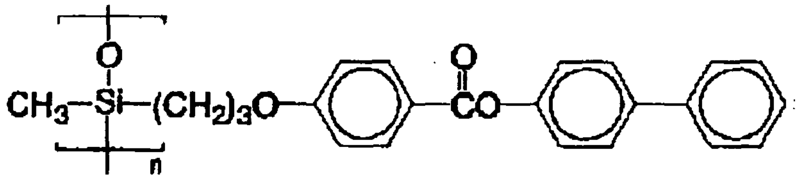

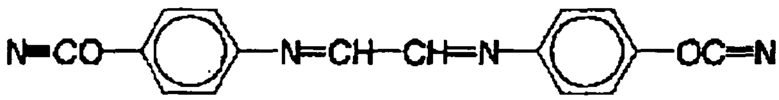

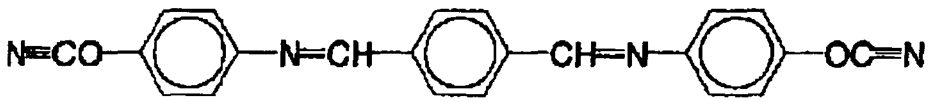

In the formulas described above, "n" represents an integer of 1 to 1000. Similarly, in addition to these compounds, the nematic liquid crystal compounds may include, for example, other compounds, where each of the compounds exemplified above may be properly substituted for the groups connected at the side chains into those of the following structures.

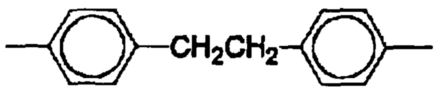

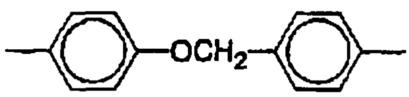

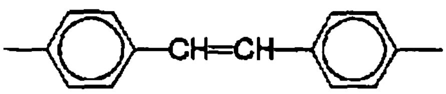

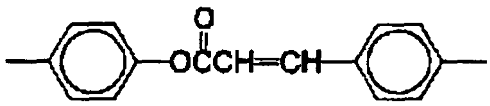

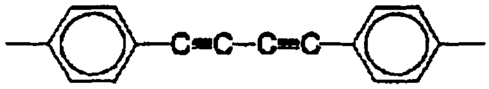

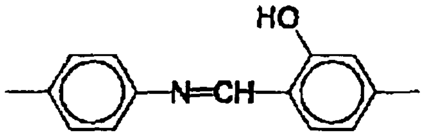

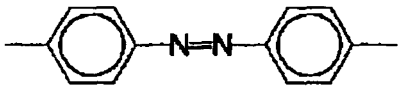

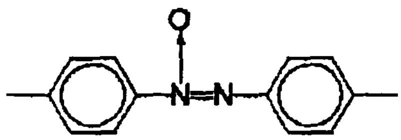

Among the above exemplified compounds, the nematic liquid crystal compounds are preferably those having a polymerizable group per molecule from the view point of assuring sufficient curing ability. Among these, ultraviolet (UV) polymerizable liquid crystal compounds are preferable. Such UV polymerizable liquid crystal compounds are commercially available; examples thereof include PALIOCOLOR LC242 (product name, manufactured by BASF Corp.), E7 (product name, manufactured by Merck Ltd.), LC-Silicon-CC3767 (product name, manufactured by Wacker-Chem), and L35, L42, L55, L59, L63, L79 and L83 (product name, manufactured by Takasago International Corp.).

The amount of the nematic liquid crystal compound is preferably 30% by mass to 99% by mass, more preferably 50% by mass to 99% by mass, per total solids mass of each of the cholesteric liquid crystal layers. When the amount of the nematic liquid crystal compound is less than 30% by mass, the alignment of nematic liquid crystal molecules becomes insufficient on some occasions.

- Chiral compound -

The chiral compound is not particularly limited and may be appropriately selected from the known ones depending on the purpose; examples thereof may include isomannide compounds, catechine compounds, isosorbide compounds, fenchone compounds, carvone compounds and other compounds shown below in view of the hues of the liquid crystal compounds and for enhanced color purity. These compounds may be used alone or in combination.

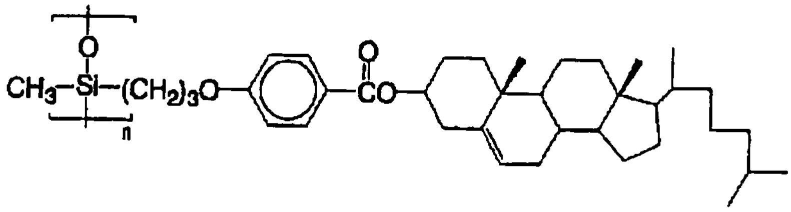

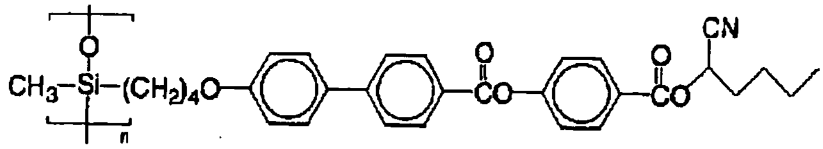

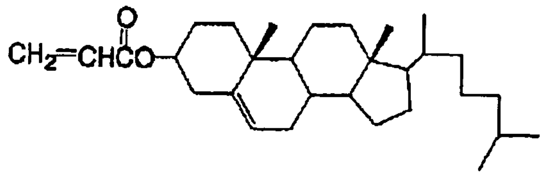

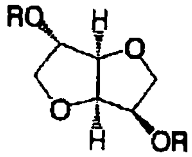

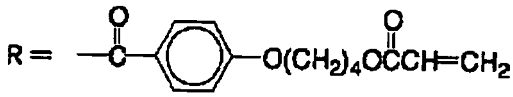

Left-hand helix

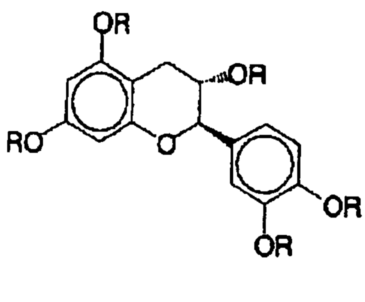

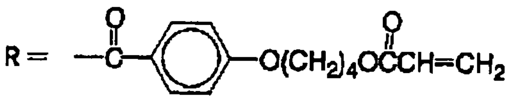

Left-hand helix

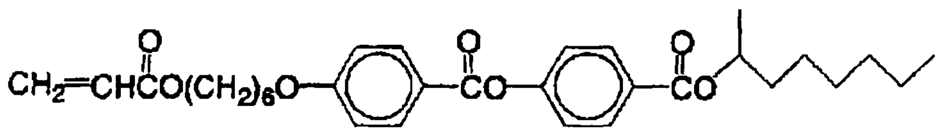

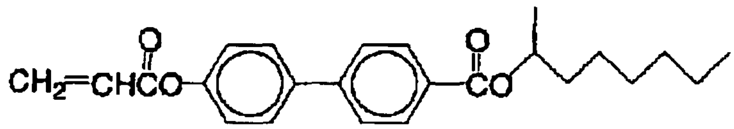

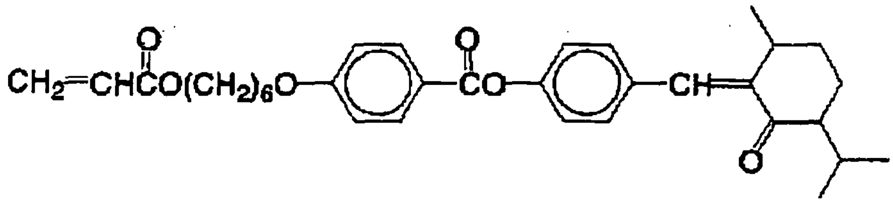

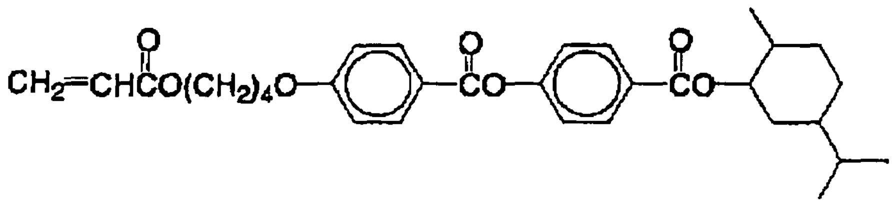

In addition, commercially available chiral compounds may be used; examples thereof include S101, R811 and CB15 (product name, manufactured by Merck Ltd.); and PALIOCOLOR LC756 (product name, manufactured by BASF Corp.).

The amount of the chiral compound in each liquid crystal layer of the multilayered cholesteric liquid crystal layer is preferably 0% by mass to 30% by mass, more preferably 0% by mass to 20% by mass based on the total solid mass of the respective liquid crystal layer. When the amount of the chiral compound is more than 30% by mass, the alignment may be insufficient in the cholesteric liquid crystal layer on some occasions.

- Polymerizable monomer -

A polymerizable monomer may be additionally included to the cholesteric liquid crystal layer in order, for example, to increase the curing level such as film strength. Additional use of the polymerizable monomer may increase the strength of the cholesteric liquid crystal layer, where different twisting degrees (patterning) have been set for liquid crystals through which light propagates (e.g., the distribution of wavelengths of light to be reflected has been created) and where the helical structure (i.e., selective reflection capability) has been fixed. Note, however, that such polymerizable monomers need not necessarily to be added if the liquid crystal compound bears polymerizable groups in a molecule.

The polymerizable monomers are not particularly limited and may be appropriately selected from the known ones depending on the purpose; examples thereof include monomers with an ethylenically unsaturated bonds, more specifically, multifunctional monomers such as pentaerythritoltetraacrylate and dipentaerythritolhexaacrylate.

The specific examples of the monomers with an ethylenically unsaturated bonds are those shown below. These may be used alone or in combination.

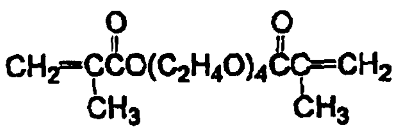

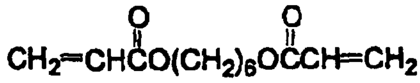

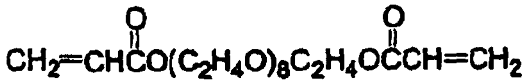

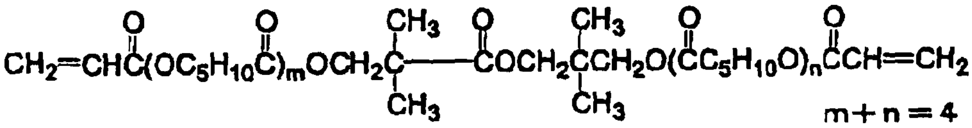

m+n=4

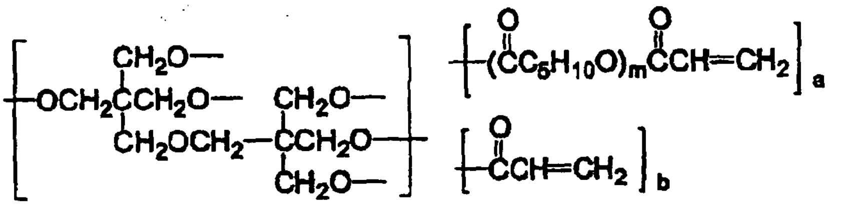

A : m=1, a=6, b=0
B : m=2, a=6, b=0

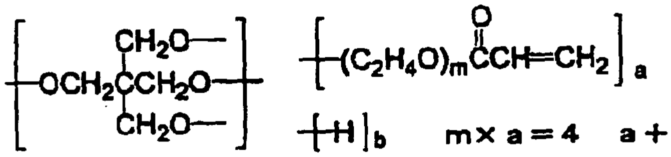

m×a=4 a+b=4

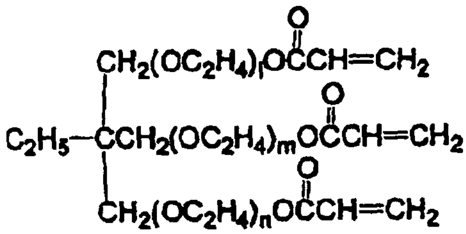

l+m+n=3.5

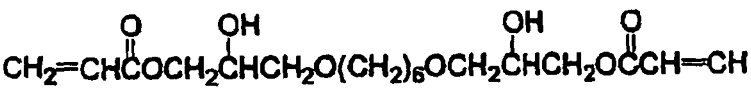

The amount of the polymerizable monomers is preferably 0% by mass to 50% by mass, more preferably 1% by mass to 20% by mass with respect to the total solid mass of each cholesteric liquid crystal layer. When the amount of the polymerizable monomers is more than 50% by mass, the alignment may be inhibited in the cholesteric liquid crystal layer on some occasions.

- Other Components -

The other components are not particularly limited and may be appropriately selected depending on the purpose; examples thereof include photopolymerization initiators, sensitizers, binder resins, polymerization inhibitors, solvents, surfactants, thickeners, dyes, pigments, ultraviolet absorbers and gelling agents.

The photopolymerization initiators are not particularly limited and may be appropriately selected from the known ones depending on the purpose; examples thereof include p-methoxyphenyl-2,4-bis(trichloromethyl)-s-triazine, 2-(p-buthoxystyryl)-5-trichloromethyl-1,3,4-oxadiazole, 9-phenylacridine, 9,10-dimethylbenzphenazine, benzophenone/Michler's ketone, hexaarylbiimidazole/mercaptobenzoimidazole, benzyldimethylketal and thioxanthone/amine. These may be used alone or in combination.

The photopolymerization initiators may be commercially available ones; examples thereof include IRGACURE 907, IRGACURE 369, IRGACURE 784 and IRGACURE 814 (product name, manufactured by Ciba Specialty Chemicals KK); and Lucirin TPO (product name, by BASF Corp.).

The amount of the photopolymerization initiator is preferably 0.1% by mass to 20% by mass, more preferably 0.5% by mass to 5% by mass based on the total solid mass of each cholesteric liquid crystal layer. When the amount of the photopolymerization initiator is less than 0.1% by mass, on some occasions it takes long time for the polymerization because of reduced curing efficiency upon irradiation with light. When the amount of the photopolymerization initiator is greater than 20% by mass, it results in poor optical transmittance over the spectrum from ultraviolet to visible light on some occasions.

The sensitizer is added as required in order to increase the cure level in the cholesteric liquid crystal layer. The sensitizer is not particularly limited and may be appropriately selected from the known ones depending on the purpose; examples thereof include diethylthioxanthone and isopropylthioxanthone. The amount of the sensitizer is preferably 0.001% by mass to 1% by mass based on the total solid mass of each cholesteric liquid crystal layer.

The binder resin is not particularly limited and may be appropriately selected from the known ones depending on the purpose; examples thereof include polyvinyl alcohols; polystyrene compounds such as polystyrene and poly-$\alpha$-methylstyrene; cellulose resins such as methylcellulose, ethylcellulose and acetylcellulose; acid cellulose derivatives having a carboxylic group as their side chains; acetal resins such as polyvinyl formal and polyvinyl butyral; methacrylic acid copolymers; acrylic acid copolymers; itaconic acid copolymers; crotonic acid copolymers; malleic acid copolymers; partially-esterified malleic acid copolymers; homopolymers of acrylic acid alkylesters or homopolymers of methacrylic acid alkyl esters; and polymers having a hydroxyl group. These binder resins may be used alone or in combination.

Examples of alkyl groups in the homopolymers of acrylic acid alkylesters or homopolymers of methacrylic acid alkyl esters include methyl group, ethyl group, n-propyl group, n-butyl group, isobutyl group, n-hexyl group, cyclohexyl group and 2-ethylhexyl group.

Examples of the polymers having hydroxyl group include benzyl(meth)acrylate/(methacrylic acid homopolymers) acrylic acid copolymers, and multicomponent copolymers of benzyl(meth)acrylate/(meth)acrylic acid/other monomers.

The amount of the binder resin is preferably 0% by mass to 80% by mass, more preferably 0% by mass to 50% by mass based on the total solids mass of each cholesteric liquid crystal layer. When the amount of the polymerizable monomers is more than 80% by mass, the alignment becomes insufficient in the cholesteric liquid crystal layer on some occasions.

The polymerization inhibitor is not particularly limited and may be appropriately selected depending on the purpose; examples thereof include hydroquinones, hydroquinone monomethylethers, phenothiazines, benzoquinones and derivatives thereof.

The amount of the polymerization inhibitor is preferably 0% by mass to 10% by mass or less, more preferably 0.01% by mass to 1% by mass based on the total solid content of the polymerizable monomers.

The solvent is not particularly limited and may be appropriately selected from the known ones depending on the purpose; examples thereof include alkoxypropionic acid esters such as 3-methoxypropionic acid methylester, 3-methoxypropionic acid ethylester, 3-methoxypropionic acid propylester, 3-ethoxypropionic acid methylester, 3-ethoxypropionic acid ethylester and 3-ethoxypropionic acid propylester; alkoxy alcohol esters such as 2-methoxypropylacetate, 2-ethoxypropylacetate and 3-methoxybutylacetate; lactic acid esters such as methyl lactate and ethyl lactate; ketones such as methyl ethyl ketone, cyclohexanone and methylcyclohexanone; $\gamma$-butyrolactone; N-methylpyrrohdone; dimethylsulfoxide; chloroform; and tetrahydrofuran. These solvents may be used alone or in combination.

- Reflective film -

The reflective film is formed on the surface of the servo pit pattern of the lower substrate. As for the material of the reflective film, such material is preferable that provides high reflectivity to the recording light or reference light. When the wavelength of light to be adopted is 400 nm to 780 nm, Al, Al alloys, Ag, Ag alloys and the like are preferably

used. When the wavelength of light to be adopted is 650 nm or more, Al, Al alloys, Ag. Ag alloys, Au, Cu alloys, TiN and the like are preferably used.

In addition to reflecting light as the reflective film, the reflective film makes it possible to record or rewrite such directory information, without adversely affecting holograms, as those indicative of the locations where information has been recorded in the hologram, the time when information has been rewritten, and the locations where errors have occurred and how information has been re-recorded on spare areas, by using an optical recording medium, e.g. DVD (digital video disc), that is capable of any one of recording and rewriting.

The process for forming the reflective film is not particularly limited and may be appropriately selected depending on the purpose; examples thereof include various types of vapor deposition, such as a vacuum vapor deposition, sputtering, plasma CVD, photo CVD, ion plating, and electron beam vapor deposition. Among these, sputtering is most preferable in view of mass productivity and film quality. The thickness of the reflective film is preferably 50 nm or more, and more preferably 100 nm or more, in order to secure sufficient reflectivity.

- First gap layer -

The first gap layer is provided between the filter layer and the reflective film as required for smoothing the surface of the lower substrate. Moreover, the first gap layer is effective to adjust the size of the hologram formed in the recording layer. Namely, a gap layer between the recording layer and the servo pit pattern may be effective, since the recording layer requires the interference region of some larger size produced by the recording reference light and the information light.

The first gap layer can be formed by, for example, applying UV curable resin etc. on the servo pit pattern by spin coating etc. and by curing the resin. In addition, when a filter layer is applied and formed on a transparent substrate, the transparent substrate also serves as the first gap layer. The thickness of the first gap layer is not particularly limited and may be appropriately selected depending on the purpose; the thickness is preferably 1 μm to 200 μm.

- Second gap layer -

The second gap layer may be provided between the recording layer and the filter layer as required. The material for the second gap layer is not particularly limited and may be appropriately selected depending on the purpose; examples thereof include transparent resin films such as triacetylcellulose (TAC), polycarbonate (PC), polyethylene terephthalate (PET), polystyrene (PS), polysulfone (PSF), polyvinylalcohol (PVA) and methyl polymethacrylate-polymethylmethacrylate (PMMA); norbornene resin films such as ARTON (product name, manufactured by JSR Corp.), ZEONOA (product name, manufactured by Zeon Corporation). Among these, those with high isotropy are preferable, and TAC, PC, ARTON and ZEONOA are most preferable.

The thickness of the second gap layer is not particularly limited and may be appropriately selected depending on the purpose; the thickness is preferably 1 μm to 200 μm.

FIG. 2 is a schematic cross-sectional view showing the structure of the first embodiment of the optical recording medium in the present invention. In the optical recording medium 21 according to the first embodiment, servo pit pattern 3 is formed on the lower substrate 1 made of a polycarbonate resin or glass, and the servo pit pattern 3 is coated with Al, Au, Pt or the like to form reflective film 2. Although the servo pit pattern 3 is formed on the entire surface of the lower substrate 1 in FIG. 2, it may be formed on the lower substrate 1 periodically as shown in FIG. 1. In addition, the height of the servo pit pattern 3 is 1750 angstroms (175 nm) at maximum, which is sufficiently smaller than those of the other layers including the lower substrate.

The first gap layer 8 is formed on the reflective film 2 of the lower substrate 1 by applying such material as a UV curable resin using spin coating method. The first gap layer 8 is effective not only in protecting the reflective film 2 but also in adjusting the size of the hologram formed in the recording layer. Namely, providing a gap layer between the recording layer 4 and the servo pit pattern 3 is effective, because it is necessary to secure a certain size of interference region by the recording reference light and the information light in the recording layer 4.

The filter layer 6 is provided on the first gap layer 8, the transparent resin layer 10 is provided between the recording layer 4 and the upper substrate 5 (polycarbonate resin substrate or glass substrate) to provide the optical recording medium 21.

As shown in FIG.2, the filter layer 6 transmits only red light and blocks other color lights. Since the information light, recording reference light and reproducing reference light are of green or blue, they do not pass through the filter layer 6 instead turn into a return light to emit from the entrance/ exit surface A without reaching the reflective film 2.

The filter layer 6 is a multiple dielectric material deposition layer in which 7 dielectric thin films of different refractive indexes are laminated. The filter layer 6 composed of this multiple dielectric material deposition layer may be directly formed on the first gap layer 8 by coating process, or may be disposed by punching through the film, in which the multiple dielectric material deposition layer is formed on a substrate, into a shape of the optical recording medium,

and by placing the punched film. In addition when the multiple dielectric material deposition layer is used, a quarter wave plate may be inserted between the multiple dielectric material deposition layer and the entrance/ exit surface as a component of the optical recording medium, or may be placed between the dichroic mirror and the optical recording medium as a component of an optical system.

This quarter wave plate shifts, for only green light, phase of light by one-4th wavelength which makes the green light circularly-polarized. When light of other color (for example, red) is incoming, the light is elliptically-polarized by the quarter wave plate.

The optical recording medium 21 of the first embodiment may be of disc shape or card shape. The servo pit pattern is unnecessary where the optical recording medium 21 is a card shape. In the optical recording medium 21, the lower substrate 1 is 0.6 mm thick, the first gap layer 8 is 100 μm thick, the filter layer 6 is 2 μm to 3 μm thick, the recording layer 4 is 0.6 mm thick, the transparent resin layer 10 is 50 μm thick and the upper substrate 5 is 0.6 mm thick, leading to the total thickness of about 1.9 mm.

The optical operations around the optical recording medium 21 will be described with reference to FIG. 8 below. First, light (red light) emitted from the servo laser source is reflected by dichroic mirror 13 by almost 100%, and passes through objective lens 12. The servo light is applied onto the optical recording medium 21 in such a way that it focuses on the reflective film 2 by the objective lens 12. More specifically, the dichroic mirror 13 is so formed that it transmits only green or blue light but reflects almost 100% of red light. The servo light incident from the light entrance/exit surface A of the optical recording medium 21 passes through the upper substrate 5, transparent resin layer 10, recording layer 4, filter layer 6 and first gap layer 8, is reflected by the reflective film 2, and passes again through the first gap layer 8, filter layer 6, recording layer 4, transparent resin layer10 and upper substrate 5 to emit from the light entrance/exit surface A. The returning servo light passes through the objective lens 12 and is reflected by the dichroic mirror 13 by almost 100%, and then a servo information detector (not shown) detects servo information in the returning servo light. The detected servo information is used for the focus servo operation, tracking servo operation, slide servo operation, and the like. The hologram material composed of the recording layer 4 is chosen so as not to be sensitive to red light. For this reason, even when the servo light has passed through the recording layer 4 or has been reflected diffusively by the reflective film 2, the recording layer 4 is not adversely affected. In addition, the returning servo light that has been reflected by the reflective film 2 is reflected almost 100% by the dichroic mirror 13; accordingly, the servo light is non-detectable by CMOS sensor or CCD 14 used for the detection of reconstructed images, thus providing no noise to reproduction light.

Both of the information light and recording reference light emitted from the recording/reproducing laser source pass through the polarizing plate 16 to form a linear polarization then to form a circular polarization when passing through the half mirror 17 and the quarter wave plate 15. The circular polarization then passes through the dichroic mirror 13, and illuminates the optical recording media 21 by action of the objective lens 11 in a manner that the information light and the recording reference light create an interference pattern in the recording layer 4. The information light and recording reference light enter from the light entrance/exit surface A and interact with each other in the recording layer 4 to form an interference pattern. Thereafter, the information light and recording reference light enters into the recording layer 4 and the filter layer 6, and then, are reflected to turn into a return light before reaching the bottom of the filter layer 6. That is, the information light and recording reference light do not reach the reflective film 2. This is because the filter layer 6, formed of a multiple dielectric material deposition layer, transmits exclusively red light.

<Second embodiment>

FIG. 3 is a schematic cross-sectional view showing the configuration of the optical recording medium of the second embodiment of the present invention. In the optical recording medium 22 of the second embodiment, servo pit pattern 3 is formed on the lower substrate 1 made of polycarbonate resin or glass, and the servo pit pattern 3 is coated with Al, Au, Pt or the like to form the reflective film 2. The height of the servo pit pattern 3 is usually 1,750 angstroms (175 nm), as in the first embodiment.

The difference in structure between the first embodiment and the second embodiment is that the second gap layer 7 is provided between the filter layer 6 and the recording layer 4 in the optical recording medium 22 of the second embodiment.

The filter layer 6 of multiple dielectric material deposition layer, which may be similar to that of the first embodiment described above, is formed on the first gap layer 8 after forming the first gap layer 8.

In the second gap layer 7, there is a point at which the information light and the reproduction light focus as described above. When the photopolymer is embedded in this region around the point, excessive exposure takes places and thus an excess amount of monomers are consumed, leading to poor multiplexing recording capacity. Therefore, the non-reactive transparent second gap layer may be effectively provided.

In the optical recording medium 22, the lower substrate 1 is 1.0 mm thick, the first gap layer 8 is 100 μm thick, the filter layer 6 is from 3 μm to 5 μm thick, the second gap layer 7 is 70 μm thick, the recording layer 4 is 0.6 mm thick, the transparent resin layer 10 is 50 μm thick, and the upper substrate 5 is 0.4 mm thick, and the total thickness is about

2.2 mm.

When information is recorded or reproduced, the optical recording medium 22 having the structure described above is irradiated with a red servo light and a green information light as well as recording reference light and reproducing reference light. The servo light enters from the light entrance/exit surface A, passes through the transparent resin layer 10, the recording layer 4, the second gap layer 7, the filter layer 6 and the first gap layer 8, and is reflected by the reflective film 2 to turn into a return light. This return light sequentially passes through the first gap layer 8, the filter layer 6, the second gap layer 7, the recording layer 4, the transparent resin layer 10 and the upper substrate 5, and emits from the light entrance/exit surface A. The emitted return light is utilized for the focus servo operation, tracking servo operation and the like. The hologram material of the recording layer 4 is chosen to be non-sensitive to red light; therefore, the recording layer 4 receives no influence even when the servo light has passed through the recording layer 4 or has been reflected diffusively by the reflective film 2. The green information light etc. enter from the light entrance/exit surface A, then pass through the transparent resin layer 10, recording layer 4 and second gap layer 7, and reflected by the filter layer 6 to turn into a return light. The return light sequentially passes through the second gap layer 7, the recording layer 4, the transparent resin layer 10 and the upper substrate 5 again, and emits from the light entrance/exit surface A. Upon reproduction of information, both of the reproducing reference light and the reproduction light generated by irradiating the reproducing reference light onto the recording layer 4 do not reach the reflective film 2 and emit from the light entrance/exit surface A. The optical operations around the optical recording medium 22 (i.e. the objective lens 12, filter layer 6, CMOS sensor or CCD 14 as a detector in FIG. 8) are similar to those in the first embodiment (FIG. 8), thus the description thereof will be omitted.

(Production method of optical recording medium)

The first form of the production method of the optical recording medium of the present invention includes at least a first transparent resin layer forming step and further other step(s) as required.

- Transparent resin layer forming step -

The first transparent resin layer forming step is a step of applying a transparent resin layer composition containing at least a thermosetting resin on either a surface of the upper substrate or a surface of the recording layer, bonding the upper substrate to the recording layer with the transparent resin layer composition being sandwiched therebetween, and thermally curing the transparent resin layer composition to form the transparent resin layer.

For the transparent resin layer compositions, those compositions are used in which the viscosity of transparent resin layer material described above is adjusted by a solvent.

The coating method of the transparent resin layer composition is not particularly limited, may be appropriately selected from those known depending on the purpose, and includes, for example, an ink-jet method, spin coating method, kneader coating method, bar coating method, blade coating method, casting method, dipping method, and curtain coating method. Among these methods, spin coating method is most preferable.

The conditions for thermosetting the transparent resin layer composition are not particularly limited, may be appropriately selected depending on the type of resin used, and are preferably, for example, at a temperature of 60°C to 150°C and for 30 min to 2 hours.

The second form of the production method of the optical recording medium of the present invention includes at least a second transparent resin layer forming step of applying a transparent resin layer composition containing a slow-setting UV curable resin on a surface of the upper substrate, exposing the transparent resin layer composition to ultraviolet rays, bonding the upper substrate to the recording layer with the transparent resin layer composition being sandwiched therebetween, and curing the transparent resin layer composition to form the transparent resin layer, and further other step(s) as required.

In the second form of the method of the present invention, since the recording layer is sensitive to ultraviolet exposure, the transparent resin layer composition containing the slow-setting UV curable resin is applied to a surface of the upper substrate.

For the transparent resin layer compositions, those compositions are used in which the viscosity of transparent resin layer material described above is adjusted by a solvent.

The coating method of the transparent resin layer composition is not particularly limited, may be appropriately selected from those known depending on the purpose, and includes, for example, an ink-jet method, spin coating method, kneader coating method, bar coating method, blade coating method, casting method, dipping method, and curtain coating method. Among these methods, spin coating method is most preferable.

The conditions for UV exposure are not particularly limited, may be appropriately selected depending on the type of resin used, and are preferably, for example, at 10 $mJ/cm^2$ to 50 $mJ/cm^2$ and for 0.1 sec to 10 sec.

The other steps in the production methods of the first form and the second form of the optical recording medium

include a recording layer forming step, a reflective film forming step, a filter layer forming step, a first gap layer forming step and a second gap layer forming step.

<Methods for recording in and reproducing from the optical recording medium>

In the optical recording method according to the present invention, the information light and the reference light are irradiated as a co-axial luminous flux on the optical recording medium of the present invention, then the interference pattern formed by the interference of the information light and the reference light is used for recording the information in the recording layer.
In the optical reproducing method according to the present invention, a reference light is irradiated onto the interference pattern in the recording layer which is recorded by the optical recording method according to the present invention, to reproduce information.
In the optical recording method and the optical reproducing method according to the present invention, the information light with a two-dimensional intensity distribution and the reference light with almost the same intensity as that of the information light are superimposed inside the photosensitive recording layer, the resulting interference pattern formed inside the recording layer induces a distribution of the optical properties of the recording layer to thereby record such distribution as an information. On the other hand, when the recorded information is to be read (reproduced), only the reference light is irradiated onto the recording layer from the same direction to that irradiated at the time of recording, a light having an intensity distribution corresponding to the distribution of the optical property formed inside the recording layer is emitted from the recording layer as a reproduction light.
The optical recording method and the optical reproducing method according to the present invention may be carried out by use of the optical recording and reproducing apparatus of the present invention described below.
The optical recording and reproducing apparatus used for the recording method and the reproducing method of the optical recording medium of the present invention will be described with reference to FIG. 9.
FIG. 9 is a whole configuration diagram of an embodiment of the optical recording and reproducing apparatus according to the present invention. The optical recording and reproducing apparatus contains both of the optical recording apparatus and the optical reproducing apparatus.
This optical recording and reproducing apparatus 100 is equipped with a spindle 81 on which the optical recording medium 20 is placed, a spindle motor 82 which rotates the spindle 81, and a spindle servo circuit 83 which controls the spindle motor 82 so as to maintain the optical recording medium 20 at the predetermined revolution number.
The optical recording and reproducing apparatus 100 is also equipped with a pickup unit 31 which irradiates the information light and the recording reference light onto the optical recording medium 20 so as to record an information, and irradiates the reproducing reference light onto the optical recording medium 20 so as to detect the reproduction light to thereby reproduce the information recorded at the optical recording medium 20, and a driving unit 84 which enables the pickup unit 31 to move in the radial direction of optical recording medium 20.
The optical recording and reproducing apparatus 100 is equipped with a detecting circuit 85 which detects focusing error signal FE, tracking error signal TE, and reproducing signal RF from the output signal of the pickup unit 31, a focusing servo circuit 86 which drives an actuator in the pickup unit 31 so as to move an objective lens (not shown) in the thickness direction of the optical recording medium 20 based upon the focusing error signal FE detected by the detecting circuit 85 to thereby perform focusing servo, a tracking servo circuit 87 which drives an actuator in the pickup unit 31 so as to move the objective lens in the radial direction of the optical recording medium 20 based upon the tracking error signal TE detected by the detecting circuit 85 to thereby perform tracking servo, and a sliding servo circuit 88 which controls the driving unit 84 based upon the tracking error signal TE and an indication from a controller mentioned below so as to move the pickup unit 31 in the radial direction of the optical recording medium 20 to thereby perform sliding servo.
The optical recording and reproducing apparatus 100 is further equipped with a signal processing circuit 89 which decodes output data of the CMOS or CCD array described below in the pickup unit 31, to thereby reproduce the data recorded in the data area of the optical recording medium 20, and to reproduce the standard clock or determines the address based on the reproducing signal RF from the detecting circuit 85, a controller 90 which controls the whole optical recording and reproducing apparatus 100, and a controlling unit 91 which gives various instructions to the controller 90. The controller 90 is configured to input the standard clock or address information output from the signal processing circuit 89 as well as controlling the pickup unit 31, the spindle servo circuit 83, the sliding servo circuit 88 and the like. The spindle servo circuit 83 is configured to input the standard clock output from the signal processing circuit 89. The controller 90 contains CPU (center processing unit), ROM (read only memory) and RAM (random access memory), the CPU realizes the function of the controller 90 by executing programs stored in the ROM on the RAM, a working area.
The optical recording and reproducing apparatus used for the recording method and reproducing method of the present invention, using the optical recording medium of the present invention having a transparent resin layer between the upper substrate and the recording layer, can thereby improve the SIN ratio of the light signal and can perform high-density recording which has not been realized so far.

According to the present invention, a hologram type optical recording medium capable of recording high density images and a production method capable of producing the optical recording medium efficiently may be provided, wherein various problems of the related arts can be solved, e.g., occurrence of empty spaces between the recording layer and the upper substrate can be prevented, the S/N ratio of light signals can be improved, and oxygen penetration to the recording layer can be prevented.

Examples

The Examples of the present invention will be described below, which however shall not be construed as limiting the invention thereto.

(Example 1)

- Preparation of optical recording medium -

For the lower substrate a polycarbonate resin substrate having a diameter of 120 mm and a plate thickness of 0.6 mm was used. Servo pit patterns were formed on the entire surface of the lower substrate, the track pitch was 1.6 μm, the groove depth was 75 nm and the groove width was 800 nm.
A reflective film was firstly formed on the surface of the servo pit pattern of the lower substrate. Aluminum (Al) was used for the material of the reflective film. The Al reflective film of 200 nm thickness was deposited by DC magnetron spattering.
Then a polycarbonate film of a 80 μm thickness was pasted on the Al reflective film with a pressure-sensitive adhesive sheet of a 20 μm thickness to form a first gap layer.
Next, a multilayer-deposition film (filter layer) of 2.4 μm thickness, having on a substrate a total of 30 alternating thin films of $SiO_2$ and $TiO_2$, was punched through into a predetermined disc size and the punched film was pasted onto the first gap layer with an adhesive.
The filter layer was spin coated with a UV curable resin composition, which was exposed to UV light, and cured to form a second gap layer of a 50 gm thickness.
Next, on the surface of the second gap layer, an outer circumferential spacer and an inner circumferential spacer each having a thickness equal to that of the recording layer (600 μm) were adhered.
Then, into the concave region sandwiched between the outer circumferential spacer and the inner circumferential spacer, a coating solution for recording layer of the following composition was poured and cured at 80°C for 1 hour.

<Composition of coating solution for recording layer>

Di(urethane acrylate) oligomer (ALU-351, manufactured by Echo Resins Co.) ... 59 parts by mass
Isobornyl acrylate ... 30 parts by mass
Vinyl benzoate ... 10 parts by mass
Polymerization initiator (IRGACURE 784, manufactured by Ciba Specialty Chemicals Inc.) ... 1 part by mass
Then, the surface of the recording layer was spin coated with a transparent resin layer composition containing a thermosetting resin (a resin mixture of a bisphenol A epoxy resin and a bisphenol F epoxy resin), onto which an upper substrate made of polycarbonate resin having a diameter of 120 mm and a thickness of 0.6 mm was placed, and the transparent resin layer composition was heated at 80°C for 1 hour and cured to form a transparent resin layer having a thickness of 30 μm. The optical recording medium of Example 1 was prepared in this way.

(Example 2)

- Preparation of optical recording medium -

The optical recording medium of Example 2 was prepared in the same manner as in Example 1 except that the thickness of the transparent resin layer was changed to 10 μm.

(Example 3)

- Preparation of optical recording medium -

The optical recording medium of Example 3 was prepared in the same manner as in Example 1 except that the thickness of the transparent resin layer was changed to 20 μm.

(Example 4)

- Preparation of optical recording medium -

The optical recording medium of Example 4 was prepared in the same manner as in Example 1 except that the transparent resin layer was formed using a transparent resin layer composition containing a thermoplastic resin (polypropylene resin) in place of that containing the thermosetting resin (resin mixture of the bisphenol A epoxy resin and the bisphenol F epoxy resin).

(Example 5)

- Preparation of optical recording medium -

The optical recording medium of Example 5 was prepared in the same manner as in Example 1 except that instead of coating the surface of cured recording layer with the transparent resin layer composition composed of the thermosetting resin, the upper substrate was spin coated (at 2,000 rpm for 30 sec) with another transparent resin layer composition composed of "Daicure Clear Ex-4016" (manufactured by DAINIPPON INK AND CHEMICALS INCORPORATED) as a cationic slow-setting UV curable resin, followed by exposing the upper substrate spin coated with another transparent resin layer composition to ultraviolet light of 30 $mJ/cm^2$ for 0.5 sec, bonding the upper substrate with another transparent resin layer composition to the surface of recording layer so that another transparent resin layer composition is sandwiched between the upper substrate and the recording layer, and curing another transparent resin layer composition to form a transparent resin layer of thickness of 30 μm.

(Comparative Example 1)

- Preparation of optical recording medium -

The optical recording medium of Comparative Example 1 was prepared in the same manner as in Example 1 except that the transparent resin layer was not provided in the optical recording medium.

<Measurement of oxygen transmission rate>

Samples of transparent resin layers (50 μm thickness) of the transparent resin layer compositions of Example 1, 4 and 5 were prepared, and evaluated for their oxygen transmission rates by oxygen transmission rate equal pressure method (JIS K7126, ASTM D3985) in which each sample is sandwiched between oxygen flow and nitrogen flow each at about an atmospheric pressure and the transmitted oxygen is measured. The oxygen transmission rate was 85 $cc/m^2 \cdot d \cdot atm$ for the sample of the transparent resin layer of Example 1, 2,500 $cc/m^2 \cdot d \cdot atm$ for the sample of Example 4, and 100 $cc/m^2.d.atm$ for the sample of Example 5.

<Number of possible multiplexing recording>

The number of possible multiplexing recording was measured for each optical recording medium of Examples 1 to 5 and Comparative Example 1 thus obtained by recording information actually in each optical recording medium using Holographic Versatile Disc Test System (SHOT-2000, manufactured by Pulstec Industrial Co., Ltd.). The results are shown in Table 1.

<Evaluation of recording sensitivity>

The recording sensitivity was measured for each optical recording medium of Examples 1 to 5 and Comparative Example 1 thus obtained by Holographic Versatile Disc Test System (SHOT-2000, manufactured by Pulstec Industrial Co., Ltd.). The results are shown in Table 1.

<Storage stability>

Each of the optical recording media of Examples 1 to 5 and Comparative Example 1 thus obtained was written using laser light and then subjected to an accelerated aging test at a temperature of 60°C and a RH of 90% for 1 week. The media were checked if recorded information can be reproduced with no problem, and their storage stability was evaluated using the check result and the following criteria. The results are shown in Table 1.

[Evaluation criteria]

A: very good storage stability
B: good storage stability
C: less good storage stability (but usable in practice)
D: poor storage stability (unusable)

Table 1

| | Number of possible multiplexing recording | Recording sensitivity ($mJ/cm^2$) | Storage stability |
|---|---|---|---|
| Example 1 | 150 | 70 to 80 | A |
| Example 2 | 100 | 80 to 90 | B |
| Example 3 | 150 | 70 to 80 | A |
| Example 4 | 100 | 90 to 100 | C |
| Example 5 | 150 | 70 to 80 | A |
| Comp. Example 1 | 100 | 90 to 100 | D |

Industrial Applicability

The optical recording medium according to the present invention may be widely used as various types of hologram type optical recording media, since the transparent resin layer of the optical recording medium provided between the recording layer and the upper substrate can improve the S/N ratio of light signals, and can prevent oxygen from reaching the recording layer, making it possible to record high density images in the optical recording medium.

## Claims

1. An optical recording medium, comprising:

    a lower substrate having a servo pit pattern,
    a recording layer on the lower substrate for recording information by holography,
    an upper substrate on the recording layer, and
    a transparent resin layer provided between the upper substrate and the recording layer.

2. The optical recording medium according to claim 1, wherein the transparent resin layer contains any one of a thermosetting resin and a slow-setting ultraviolet (UV) curable resin.

3. The optical recording medium according to claim 2, wherein the thermosetting resin is at least one resin selected from a phenol resin, a urea resin, a melamine resin, an epoxy resin, an alkyd resin, an unsaturated polyester resin, a diallyl phthalate resin, a urethane resin, and a silicone resin.

4. The optical recording medium according to claim 3, wherein the thermosetting resin is a resin mixture of a bisphenol A epoxy resin and a bisphenol F epoxy resin.

5. The optical recording medium according to claim 2, wherein the slow-setting UV curable resin is a cationic slow-setting IN curable resin.

6. The optical recording medium according to any one of claims 1 to 5, wherein the transparent resin layer has a thickness of 20 μm or more.

7. The optical recording medium according to any one of claims 1 to 6, wherein the oxygen transmission rate of the

transparent resin layer is 1,000 $cc/m^2.d.atm$ or less.

**8.** A production method for an optical recording medium, comprising:

applying a transparent resin layer composition containing at least a thermosetting resin to any one of a surface of an upper substrate and a surface of a recording layer,
bonding the upper substrate to the recording layer with the transparent resin layer composition being sandwiched therebetween, and
thermally curing the transparent resin layer composition to form a transparent resin layer.

**9.** A production method for an optical recording medium, comprising:

applying a transparent resin layer composition containing a slow-setting UV curable resin to a surface of an upper substrate,
exposing the transparent resin layer composition to UV light,
bonding the upper substrate to a recording layer with the transparent resin layer composition being sandwiched therebetween, and
allowing the transparent resin layer composition to cure to form a transparent resin layer.

FIG. 1

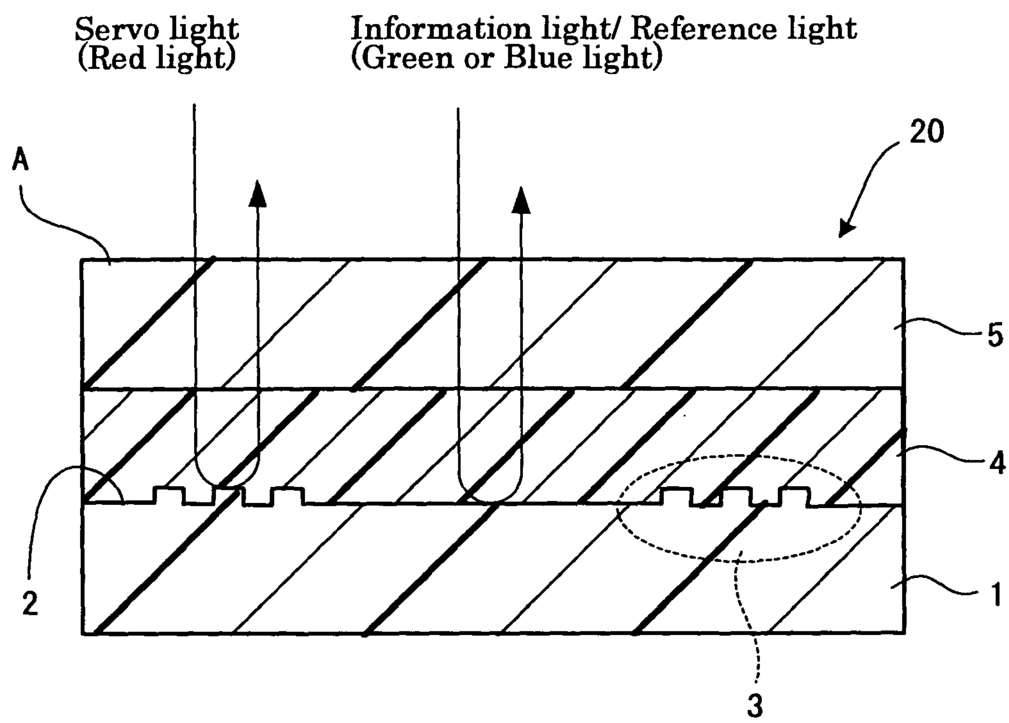
Servo light
(Red light)
Information light/ Reference light
(Green or Blue light)
20
A
5
4
2
1
3

FIG. 2

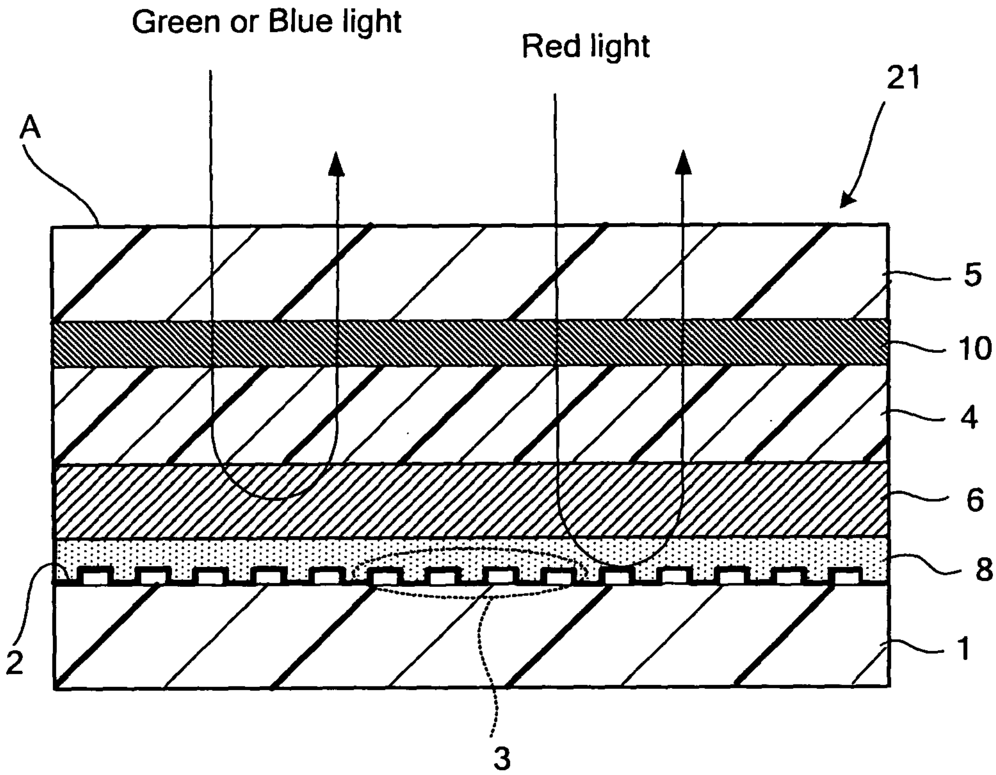

FIG. 3

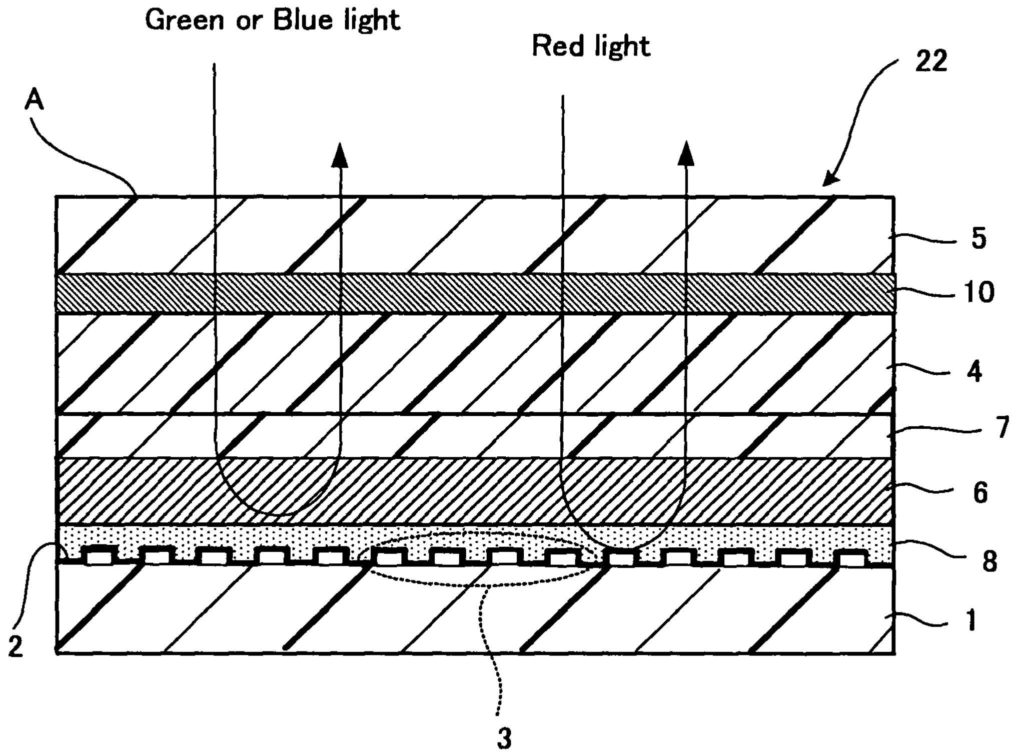

FIG. 4

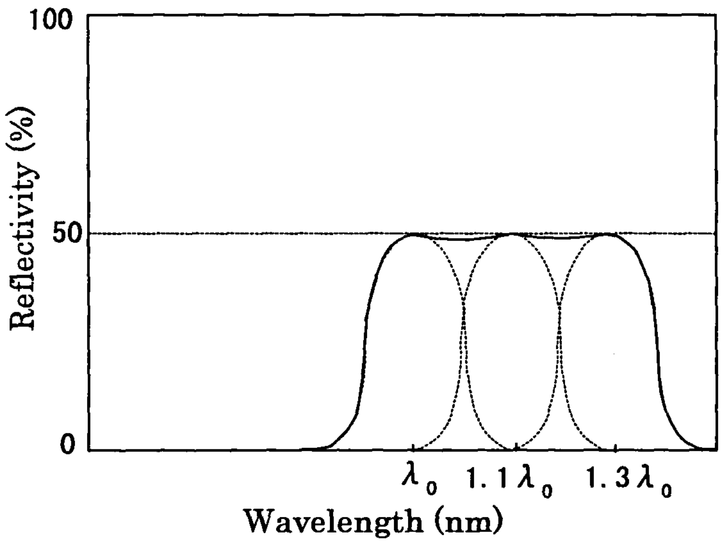
100
Reflectivity (%)
50
0
$\lambda_0$
$1.1\lambda_0$
$1.3\lambda_0$
Wavelength (nm)

FIG. 5

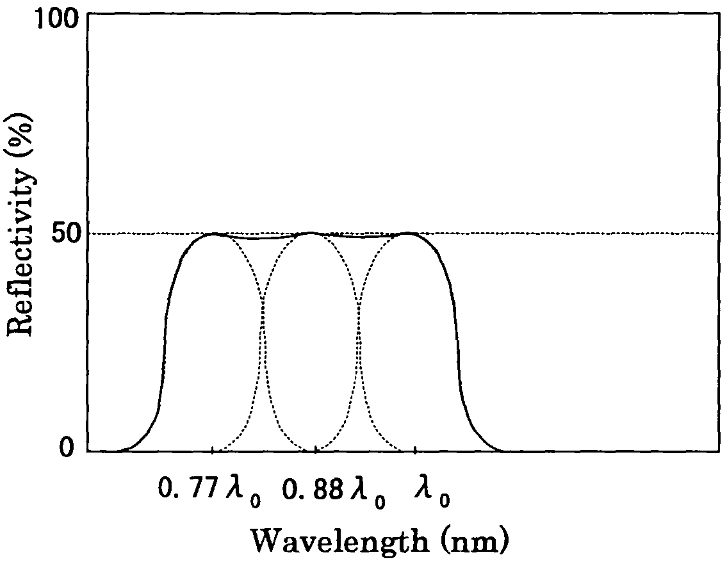
100
Reflectivity (%)
50
0
$0.77\lambda_0$
$0.88\lambda_0$
$\lambda_0$
Wavelength (nm)

FIG. 6

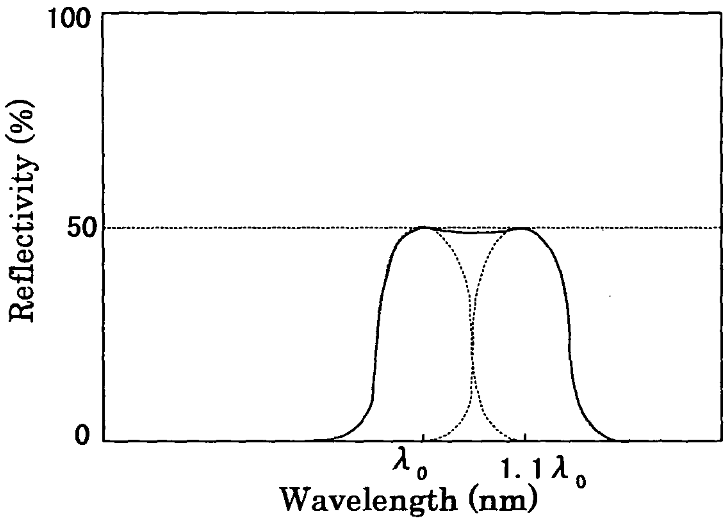
100
50
0
Reflectivity (%)
$\lambda_0$
1.1 $\lambda_0$
Wavelength (nm)

FIG. 7

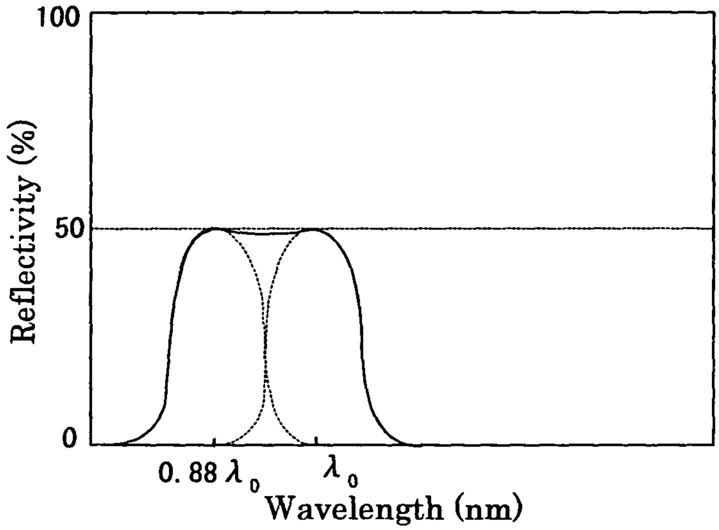
100
50
0
Reflectivity (%)
0.88 $\lambda_0$
$\lambda_0$
Wavelength (nm)

FIG. 8

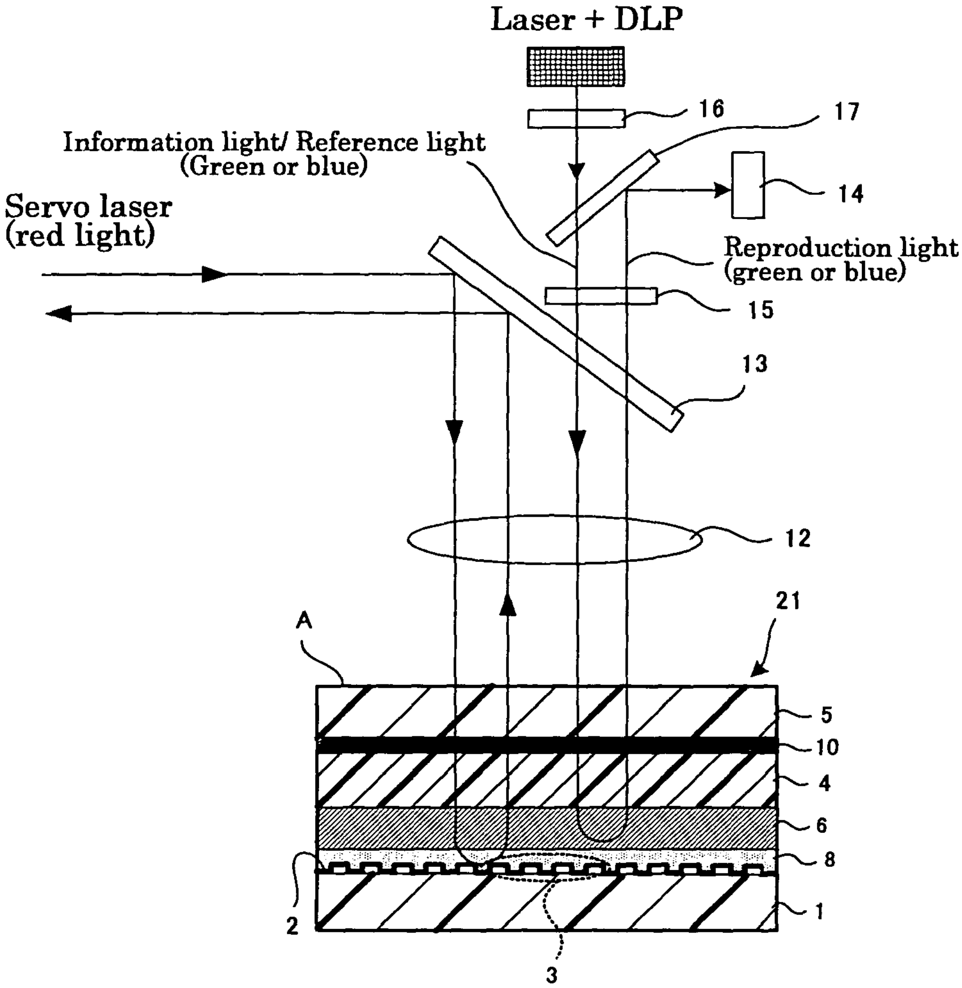
Laser + DLP
16
17
Information light/ Reference light
(Green or blue)
14
Servo laser
(red light)
Reproduction light
(green or blue)
15
13
12
21
A
5
10
4
6
8
2
1
3

FIG. 9

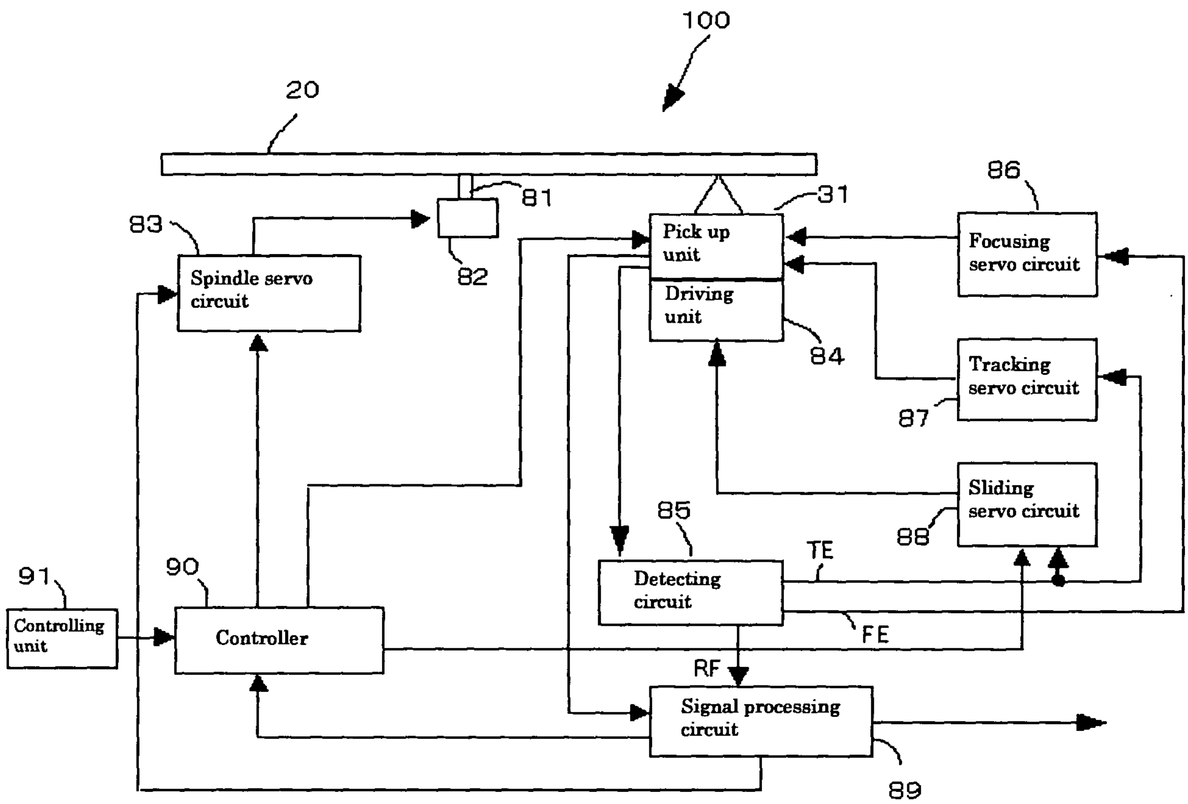
100
20
81
31
83
82
86
Spindle servo circuit
Pick up unit
Driving unit
Focusing servo circuit
84
Tracking servo circuit
87
Sliding servo circuit
85
88
TE
91
90
Detecting circuit
Controlling unit
Controller
FE
RF
Signal processing circuit
89

**INTERNATIONAL SEARCH REPORT**

International application No.
PCT/JP2006/321868

A. CLASSIFICATION OF SUBJECT MATTER
*G03H1/02*(2006.01)i, *G11B7/0065*(2006.01)i, *G11B7/09*(2006.01)i, *G11B7/244*(2006.01)i

According to International Patent Classification (IPC) or to both national classification and IPC

B. FIELDS SEARCHED

Minimum documentation searched (classification system followed by classification symbols)
G03H1/02, G11B7/0065, G11B7/09, G11B7/244

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-331464 A (Optware Corp.), 21 November, 2003 (21.11.03), Figs. 1, 2 (Family: none) | 1-9 |
| Y | JP 6-266271 A (Dainippon Printing Co., Ltd.), 22 September, 1994 (22.09.94), Full text; all drawings (Family: none) | 1-9 |
| Y | JP 2005-165054 A (TDK Corp.), 23 June, 2005 (23.06.05), Full text; all drawings & WO 2005/054913 A1 | 1-9 |

[X] Further documents are listed in the continuation of Box C.   [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 November, 2006 (30.11.06) | 12 December, 2006 (12.12.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/321868

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2002-138131 A (Nippon Yupika Kabushiki Kaisha),<br>14 May, 2002 (14.05.02),<br>Par. Nos. [0034] to [0035]<br>(Family: none) | 1-4,6-8<br>5,9 |
| Y<br>A | JP 8-75904 A (Teijin Ltd.),<br>22 March, 1996 (22.03.96),<br>Par. Nos. [0043] to [0044]<br>(Family: none) | 1,2,5,6,7,9<br>3,4,8 |
| A | JP 2004-279443 A (Toshiba Corp.),<br>07 October, 2004 (07.10.04),<br>Full text; all drawings<br>& US 2004/0180266 A1 | 1-9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002123949 A
- JP LL311936 A
- US 5759721 A
- US 4942112 A
- US 4959284 A
- US 6221536 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 2000275859 A


### Non-patent literature cited in the description


- Photopolymer Handbook. Kogyo Chosakai Publishing Inc, 1989
- Photopolymer Technology. THE NIKKAN KOGYO SHIMBUN LTD, 1989
- *SPIE Journals and Proceedings,* 1997, vol. 3010, 354-372
- *SPIE Journals and Proceedings,* 1998, vol. 3291, 89-103